# EUROPEAN PATENT APPLICATION

(11) **EP 4 459 407 A1**
(43) Date of publication of application: **06.11.2024**
(21) Application number: 22914902.6
(22) Date of filing: 28.12.2022
(51) Int. Cl.: G05D 1/02, A01D 34/00

(54) **CONTROL METHOD FOR ROBOT TOOL AND ROBOT TOOL**

(30) Priority: 31.12.2021 CN 202111656095; 25.02.2022 CN 202220407859 U; 28.04.2022 CN 202210477729; 28.04.2022 CN 202210470559; 22.06.2022 CN 202210716545
(71) Applicant: Globe (Jiangsu) Co., Ltd., Changzhou, Jiangsu 213023 (CN)
(72) Inventor: XU, Wei, hangzhou, Jiangsu 213023 (CN); ZHUANG, Xian, hangzhou, Jiangsu 213023 (CN); ZHU, Yanliang, hangzhou, Jiangsu 213023 (CN); WANG, Huage, hangzhou, Jiangsu 213023 (CN); LI, Zhiyuan, hangzhou, Jiangsu 213023 (CN); YANG, Min, hangzhou, Jiangsu 213023 (CN)
(74) Representative: Bergenstråhle & Partners AB
(86) International application number: PCT/CN2022/142764
(87) International publication number: WO 2023/125650

(57) **Abstract**

The disclosure belongs to a field of robotic tool, specifically relates to a control method of the robotic tool and the robotic tool. The control method includes: moving the robotic tool along a first direction of a preset path, detecting a first stop event; moving the robotic tool a first preset distance along a second direction opposite to the first direction; creating an obstacle avoidance path; rotating the robotic tool a preset angle; moving the robotic tool along the obstacle avoidance path until it returns to the preset path; moving the robotic tool along the second direction until a second stop event is detected; moving the robotic tool along the first direction.

## Description

### CROSS REFERENCE TO RELATED APPLICATION

The present application is a continuation Application of PCT application No. PCT/CN2022/142764 filed on December 28, 2022, which claims the benefit of CN202111656095.9 filed on December 31, 2021, CN202210477729.2 filed on April 28, 2022, CN202210470559.5 filed on April 28, 2022, CN202220407859.4 filed on February 25, 2022 and CN202210716545.7 filed on June 22, 2022. All the above are hereby incorporated by reference for all purposes.

### TECHNICAL FIELD

The disclosure belongs to a field of robotic tool, specifically relates to a control method of the robotic tool and the robotic tool.

### BACKGROUND

Robotic tools such as robot mowers can plan the walking path in advance, and when the robotic tool is working, it can work along the planned walking path without operation. However, some special situations often appear in an actual application scenario. For example, obstacles such as pedestrians, buckets appear temporarily in the working area. When the robotic tool is blocked by these obstacles, it is necessary to make a decision in time to avoid these obstacles. However, the obstacle avoidance measures and methods in the prior art are too complex. Generally, external obstacle information is collected through a sensor and then the obstacle information is calculated, which needs a large amount of calculation. The efficiency is low, and the external sensor of high precision is expensive. In addition, the robotic tool in the prior art can miss a large number of working areas around the obstacle when avoiding obstacles, which results in a large number of rework, and affects work efficiency.

### SUMMARY

The disclosure provides a control method of a robotic tool and the control method of the robotic tool includes:
moving the robotic tool along a first direction of a preset path;
detecting a first stop event;
moving the robotic tool a first preset distance along a second direction opposite to the first direction;
creating an obstacle avoidance path;
rotating the robotic tool a preset angle;
moving the robotic tool along the obstacle avoidance path until the robotic tool returns to the preset path;
moving the robotic tool along the second direction until a second stop event is detected; and
moving the robotic tool along the first direction.

In an embodiment of the disclosure, the first stop event includes detection of an obstacle within a first threshold distance in the first direction of the robotic tool.

In an embodiment of the disclosure, the second stop event includes detection of an obstacle within a second threshold distance in the second direction of the robotic tool.

In an embodiment of the disclosure, creating the obstacle avoidance path includes:
defining an estimated radius of the obstacle, taking the estimated radius as an obstacle avoidance distance, and creating the obstacle avoidance path according to the obstacle avoidance distance.

In an embodiment of the disclosure, when the robotic tool moves along the obstacle avoidance path, detecting a front area of the robotic tool in real time, and determining whether there is the obstacle in a third threshold distance in front of the robotic tool;
moving the robotic tool to retreat at a second preset distance,
adding a preset increment to the obstacle avoidance distance as a new obstacle avoidance distance,
re-creating the new obstacle avoidance path according to the new obstacle avoidance distance.

In an embodiment of the disclosure, a planning method of the obstacle avoidance path is as follows:
determining a starting point, a position where the robotic tool locates after retreating the first preset distance being the starting point;
determining a center of a circle, a point on the preset path of the first direction of the robotic tool being the center of the circle, and a distance between the center of the circle and the starting point being equal to the obstacle avoidance distance; and
determining a semicircular path with the obstacle avoidance distance as a radius according to the center of the circle, two ends of the semicircular path being respectively located on the preset path, and the semicircular path being the obstacle avoidance path.

In an embodiment of the disclosure, the planning method of the obstacle avoidance path is as follows:
determining a starting point, a position where the robotic tool locates after retreating the first preset distance being the starting point;
determining a first section, the first section being perpendicular to the preset path, the starting point being a start point of the first section and a length of the first section being equal to the obstacle avoidance distance; and
determining a second section, the second section being parallel to the preset path, an end point of the first section being a start point of the second section and a length of the second section being equal to the obstacle avoidance distance;
determining a third section, the third section being perpendicular to the preset path, an end point of the second section being a start point of the third section and a length of the third section being equal to the length of the first section;
the obstacle avoidance path is the first section, the second section and the third section.

In an embodiment of the disclosure, when the robotic tool walks along the second section detects the presence of the obstacle in a third threshold distance ahead, a preset increment is added to the obstacle avoidance distance as a new obstacle avoidance distance, the length of the first section and the length of the third section are equal to the new obstacle avoidance distance, and the length of the second section is unchanged.

When the robotic tool moving along the third section detects the presence of the obstacle in the third threshold distance ahead, a preset increment to the obstacle avoidance distance is added as the new obstacle avoidance distance, the length of the second section is set to be equal to the new obstacle avoidance distance, and the length of the first section and the length of the third section are remained to be unchanged.

In an embodiment of the disclosure, after re-creating the new obstacle avoidance path according to the new obstacle avoidance distance, the robotic tool is controlled to drive into the new obstacle avoidance path from a current position of the robotic tool after retreating the second preset distance.

The disclosure provides the robotic tool and the robotic tool includes a main body, a walking mechanism, a detection module and a control module.

The walking mechanism is mounted at a bottom of the main body;

The detection module is mounted on the main body and configured to detect whether there is an obstacle in a moving direction of the robotic tool.

The control module is connected with the walking mechanism and the detection module. When the detection module detects a presence of the obstacle within a preset distance in front of the main body, the control module is capable of controlling the walking mechanism to retreat a certain distance, generates an obstacle avoidance path, and controls the walking mechanism to walk along the obstacle avoidance path.

Beneficial effects of exemplary embodiments of the disclosure are that:
when the mower of the disclosure encounters an obstacle, the mower is controlled to continue walking a distance, until a distance between the mower and the obstacle is less than the first threshold distance, then the mower is controlled to retreat the first preset distance, and then performs a follow-up avoidance action, so that the walking trajectory of the mower can cover the area around the obstacle as much as possible, which improves a mowing coverage rate.

The disclosure performs a cyclic planning to an avoidance path according to obstacle information detected by the detection module, which reduces a complexity of the detection module and an operation process, reduces an amount of calculation, improves a response speed, and reduces device cost.

### BRIEF DESCRIPTION OF THE DRAWINGS

FIG. 1 is a flowchart of a method of a robotic tool walking along a path to avoid an obstacle according to at least one embodiment of the disclosure.
FIG. 2 is a flowchart of a planning method of an obstacle avoidance path according to at least one embodiment of the disclosure.
FIG. 3 is a structural block view of an obstacle avoidance system of a robotic tool according to at least one embodiment of the disclosure.
FIG. 4 is a schematic structural view of a robotic tool according to at least one embodiment of the disclosure.
FIG. 5 through FIG. 11 are schematic views of a robotic tool tracking an obstacle avoidance process according to at least one embodiment of the disclosure.
FIG. 12 is a schematic view of the obstacle avoidance path according to at least one embodiment of the disclosure.
FIG. 13 is a flowchart of another obstacle avoidance path according to at least one embodiment of the disclosure.
FIG. 14 is a schematic view of a creating of the obstacle avoidance path under one of the working conditions according to at least one embodiment of the disclosure.
FIG. 15 is a schematic view of the creating of the obstacle avoidance path under another one of the working conditions according to at least one embodiment of the disclosure.
FIG. 16 is a structural block view of a mower system according to at least one embodiment of the disclosure.
FIG. 17 is a schematic view of an information transmission between a main mower and a sub mower in the mower system according to at least one embodiment of the disclosure.
FIG. 18 is a first schematic view of a control method according to at least one embodiment of the disclosure.
FIG. 19 is a second schematic view of the control method according to at least one embodiment of the disclosure.
FIG. 20 is a third schematic view of the control method according to at least one embodiment of the disclosure.
FIG. 21 is a schematic view of a working path of the mower in the control method according to at least one embodiment of the disclosure.
FIG. 22 is a schematic view of an RTK differential positioning method.
FIG. 23 is a schematic view of a communication system of a garden tool according to at least one embodiment of the disclosure.
FIG. 24 is a second schematic view of a communication system of a garden tool according to another embodiment of the disclosure.
FIG. 25 is a flowchart of a communication method of the garden tool according to at least one embodiment of the disclosure.
FIG. 26 is a flowchart of a positioning method of the garden tool according to at least one embodiment of the disclosure.
FIG. 27 is a structural block view of a base station according to at least one embodiment of the disclosure.
FIG. 28 is a structural block view of the garden tool according to at least one embodiment of the disclosure.
FIG. 29 is a first usage view of a safety control system of the garden tool according to at least one embodiment of the disclosure.
FIG. 30 is a second usage view of a safety control system of the garden tool according to at least one embodiment of the disclosure.
FIG. 31 is a structural block view of the safety control system of the garden tool according to at least one embodiment of the disclosure.

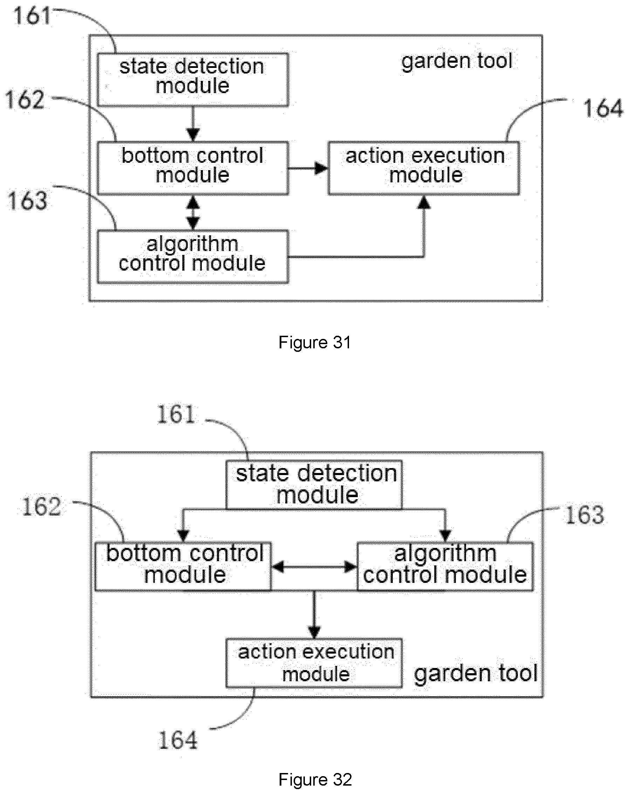

FIG. 31 is a structural block view of the safety control system of the garden tool according to another embodiment of the disclosure.

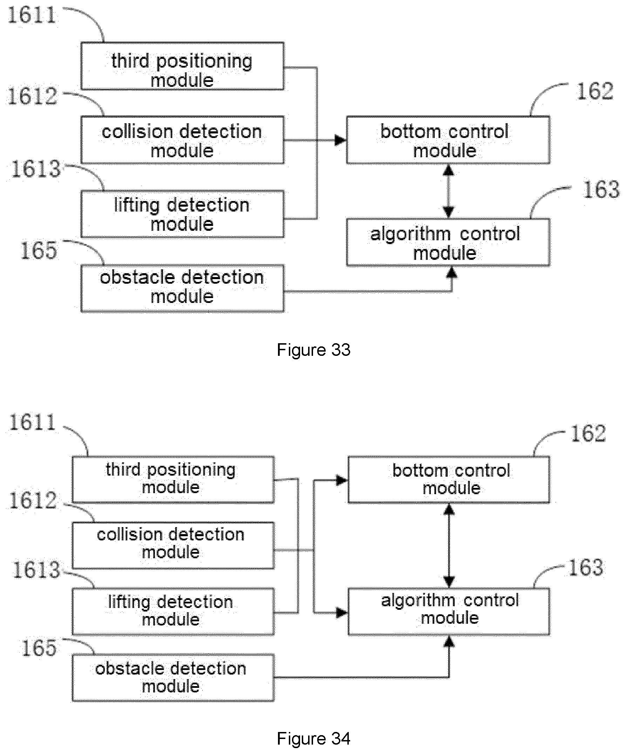

FIG. 33 is a structural block view of detection modules and control modules according to at least one embodiment of the disclosure.
FIG. 34 is a structural block view of detection modules and control modules according to another embodiment of the disclosure.

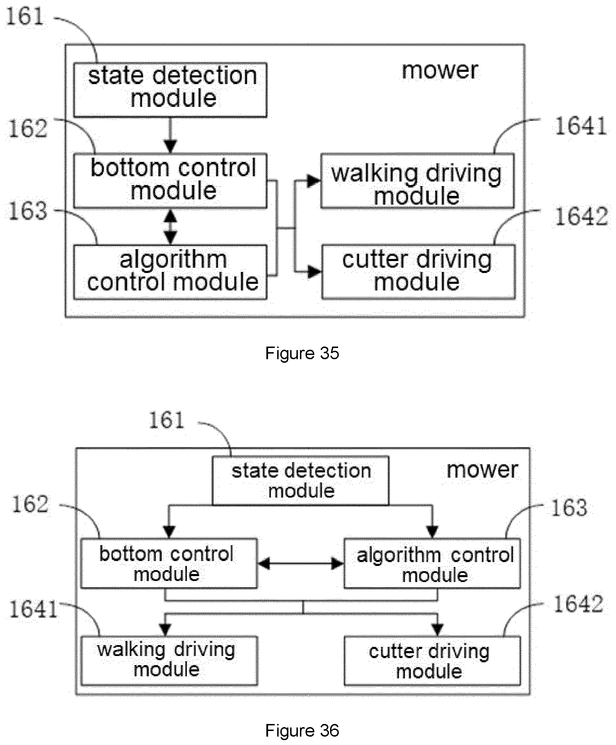

FIG. 35 is a block view of functional modules of a mower according to at least one embodiment of the disclosure.
FIG. 36 is a structural block view of functional modules of a mower according to another embodiment of the disclosure.

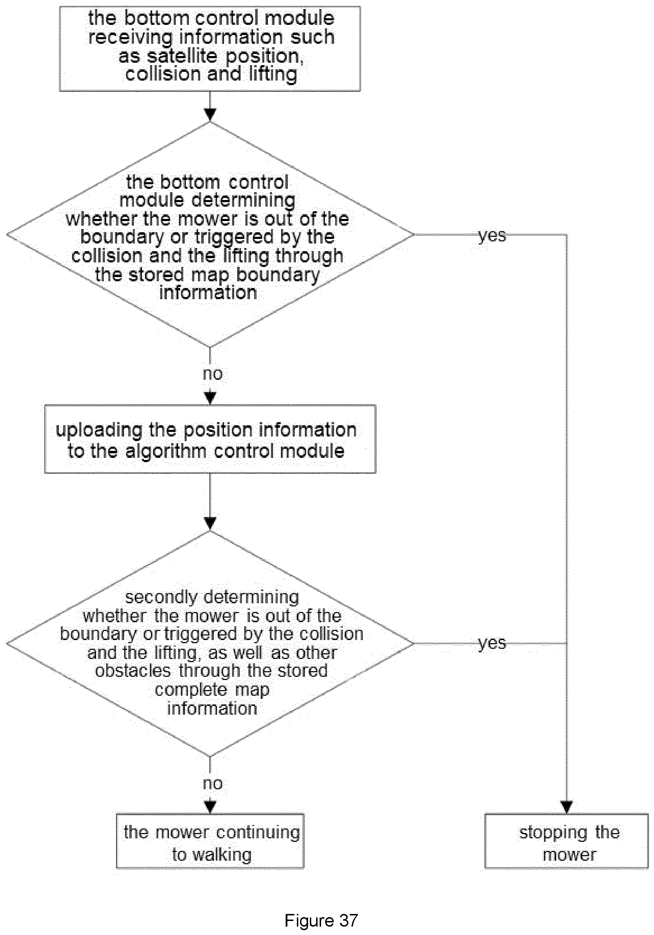

FIG. 37 is a control flowchart of the safety control system of the garden tool according to at least one embodiment of the disclosure.

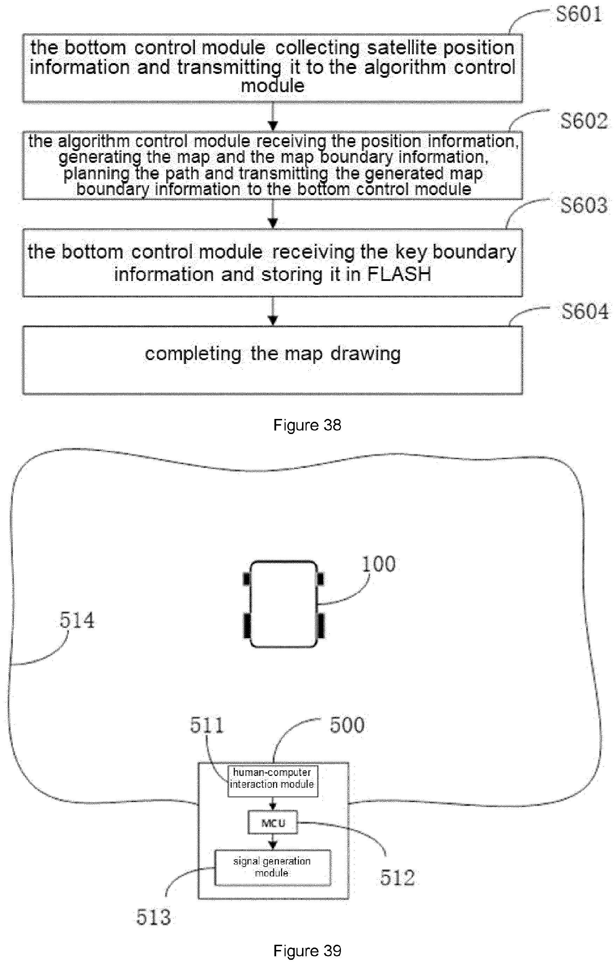

FIG. 38 is a flowchart of a map boundary drawing according to at least one embodiment of the disclosure.
FIG. 39 is a schematic view of a remote control system of the garden tool according to at least one embodiment of the disclosure.

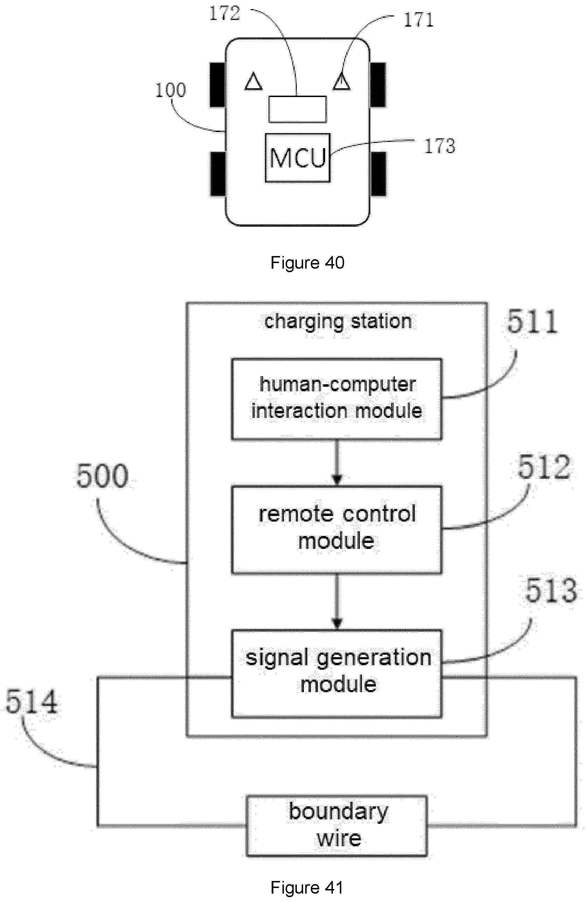

FIG. 40 is a schematic view of the garden tool according to at least one embodiment of the disclosure.
FIG. 41 is a block view of functional modules of a charging station according to at least one embodiment of the disclosure.

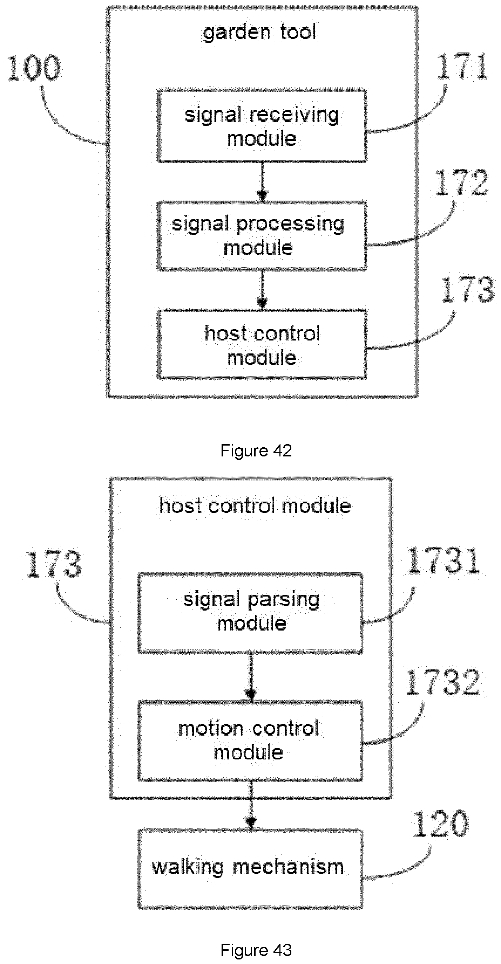

FIG. 42 is a block view of functional modules of the garden tool according to at least one embodiment of the disclosure.
FIG. 43 is a block view of functional modules of a host control module according to at least one embodiment of the disclosure.

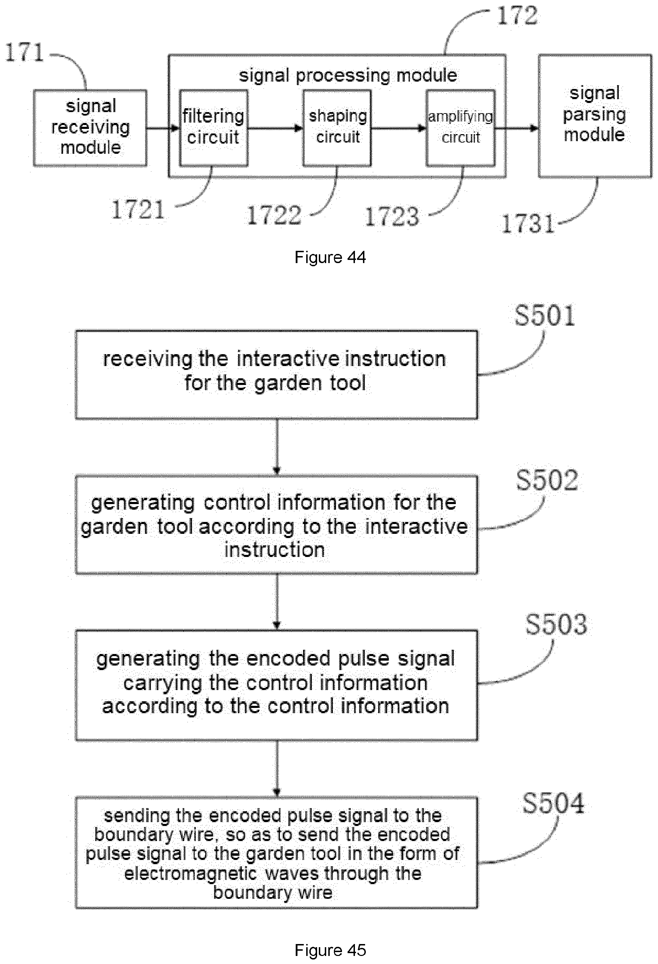

FIG. 44 is a block view of functional modules of a signal processing module according to at least one embodiment of the disclosure.
FIG. 45 is a control flowchart of a charging station in a remote control method of the garden tool according to at least one embodiment of the disclosure.

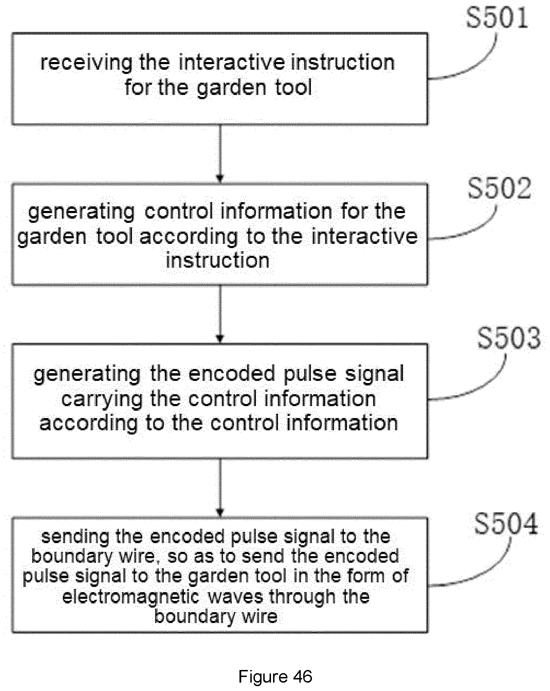

FIG. 46 is a control flowchart of a garden tool in the remote control method of the garden tool according to at least one embodiment of the disclosure.

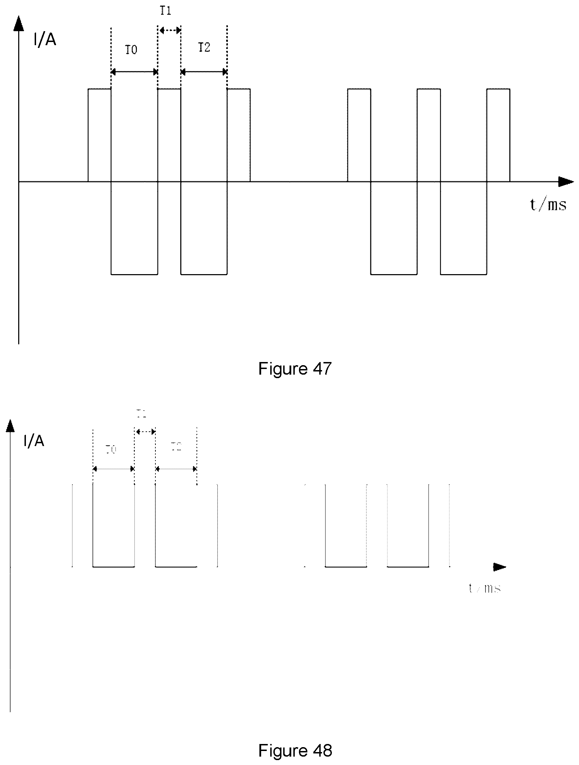

FIG. 47 and FIG. 48 are waveform diagrams of encoded pulse signals according to at least one embodiment of the disclosure.

### DETAILED DESCRIPTION

The following describes the implementation of the disclosure through specific embodiments, and those skilled in the art can easily understand other advantages and effects of the disclosure from the content disclosed in this specification. The disclosure may also be implemented or applied through other different specific embodiments. Various details in this specification may also be modified or changed based on different viewpoints and applications without departing from the disclosure. It should be noted that, the following embodiments and the features in the embodiments can be combined with each other without conflict.

It should be noted that drawings provided in the embodiments are only illustrative of a basic idea of the disclosure. The drawings only show assemblies related to the disclosure instead of drawing according to the number, shape and size of the assemblies in actual implementation. In actual implementation, the type, quantity and ratio of each assembly may be changed at will, and a layout of the assemblies may also be more complicated.

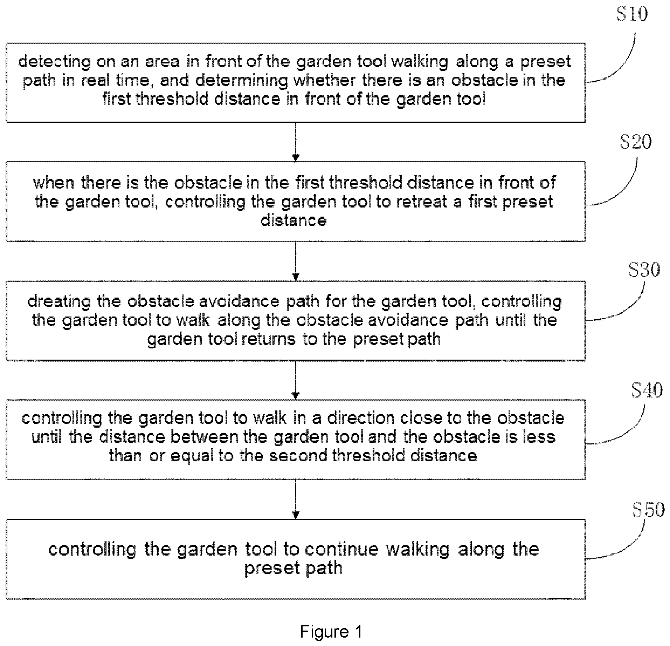

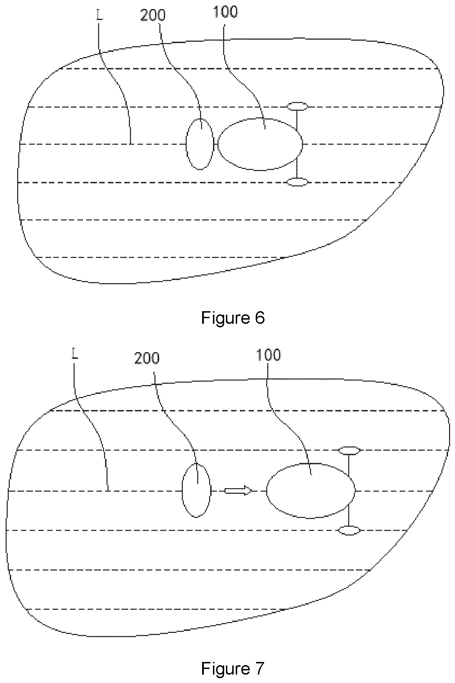

Please refer to FIG. 1 through FIG. 15. A technical solution of the disclosure is described in detail in combination with a mower. It may be understood that, a control method of a robotic tool of the disclosure is not limited to being applied to the mower. For example, the control method of the robotic tool of the disclosure may further be applied to other types of robotic tools such as robotic snow blower, robotic vacuums (also known as garden tools).

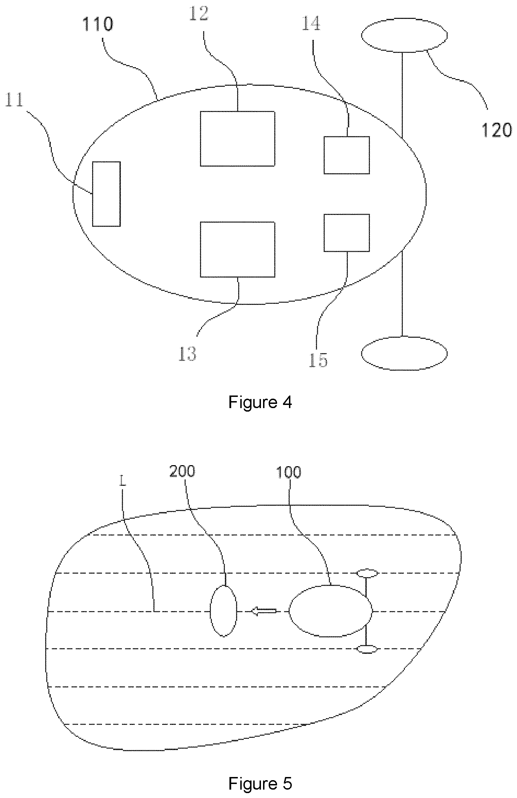

Please refer to FIG. 4. A mower 100 includes a main body 110, a walking mechanism 120, a detection module 11 and a control module. The control module further includes a walking control module 13 and a path planning module 12. It may be understood that, in order to obtain precise position information of the mower, the mower further includes a positioning module 15. In order to store operation data and control program of the mower, the mower further includes a storage module 14.

Please refer to FIG. 4. The walking mechanism 120 is mounted at a bottom of the main body 110. In an embodiment, the walking mechanism 120 for example may include two driving wheels and one caster wheel. The two driving wheels are arranged at a rear of the main body 110, the caster wheel is mounted in a center of a front part of the main body 110, and the caster wheel is covered under the main body110, so it is not visible in the figure. The walking mechanism 120 can realize a walking action of the mower. It may be understood that a specific form of the walking mechanism 120 is not limited to the above. For example, two caster wheels and two driving wheels may also be arranged, or two groups of track wheels are respectively arranged on two sides of the main body 110.

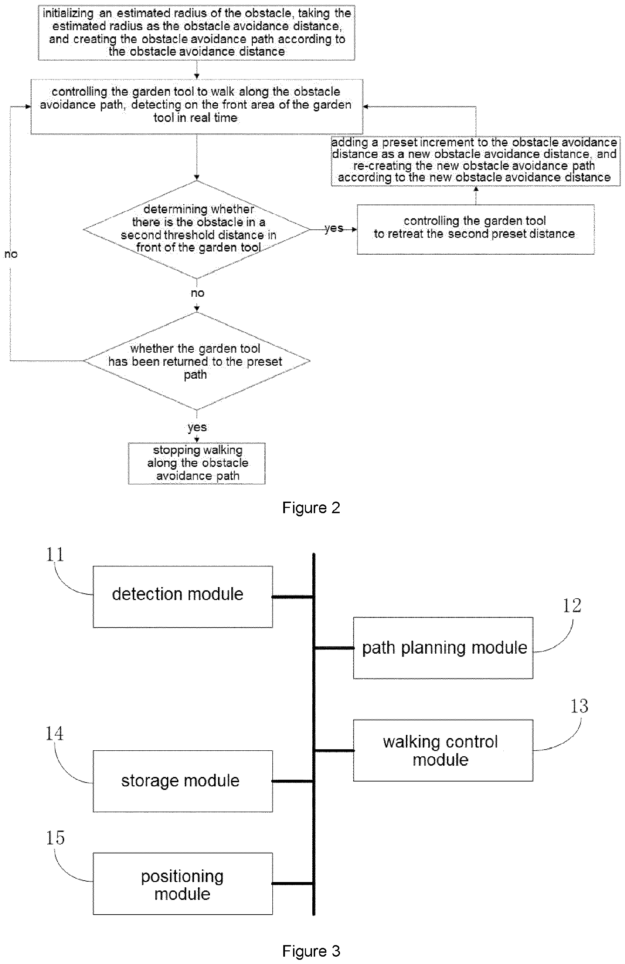

Please refer to FIG. 3 and FIG. 4. The walking control module 13 is connected with the walking mechanism 120, and the walking control module 13 is configured to control at least forward, backward and steering actions of the robotic tool.

Please refer to FIG. 4. The detection module 11 is mounted at least at the front end of the main body 110, and the detection module 11 is used for detecting whether there is an obstacle in front of the main body 110. In an exemplary embodiment, the detection module 11 may be provided with two groups for example, and the two groups of the detection modules are respectively placed at front and rear ends of the main body 110. The detection module 11 is to detect whether there is an obstacle in front and behind the mower, and a distance between the obstacle and the mower. Therefore, a specific form of the detection module 11 is not particularly limited. For example, the detection module 11 may be one of a mechanical collision sensor, an ultrasonic radar, a laser radar, an image recognition camera, or multiple detection modules 11 may be used in combination to obtain more accurate detection data. The detection module 11 is connected with the walking control module 13.

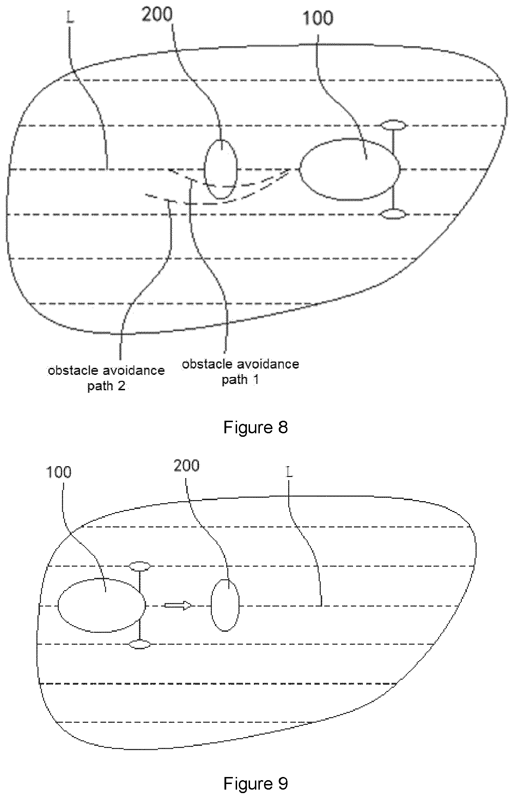

Please refer to FIG. 4 and FIG. 8. The path planning module 12 is connected with the detection module 11 and the walking control module 13. When the detection module 11 detects that there is the obstacle in a first threshold distance in front of the robotic tool, the path planning module 12 can create an obstacle avoidance path for the robotic tool and sends the obstacle avoidance path to the walking control module 13. The walking control module 13 controls the robotic tool to walk along the obstacle avoidance path, until the robotic tool returns to a preset path.

Please refer to FIG. 1. A control method of the mower mentioned above comprises:
S10: please refer to FIG. 5, detecting an area in front (which means a first direction) of the mower 100 walking along a preset path L in real time, and determining whether there is an obstacle 200 in a first threshold distance in front of the mower 100 (which means that whether there is a first stop event).

It should be noted that, the mower 100 of the disclosure can create a working path in advance. When the mower 100 works, the mower 100 walks along a pre-planned path (which means the preset path L). The preset path L is shown as a horizontal dashed line in FIG. 5 through FIG. 11, and the figures shows a relatively simple preset path L. Actually, the preset path L of the mower 100 needs to be set according to a shape of the working area and a distribution of buildings in the working area, so there may be a large number of curve paths. For this case, a perpendicularity to the preset path L mentioned in the disclosure may be understood to be perpendicular to a tangent direction of the preset path L of a current position of the mower 100.

It may be understood that, a front area of the mower 100 walking along the preset path L is detected in real time, and this process is mainly realized by the detection module 11 at a front end of the mower 100.

S20: when there is the obstacle 200 in the first threshold distance in front of the mower 100, controlling the mower 100 to retreat a first preset distance (which means moving the first preset distance along a second direction).

It should be noted that, the mower 100 of the disclosure does not immediately perform an obstacle avoidance action once it detects an obstacle 200, but first control the mower 100 to continue to walk a certain distance until the distance between the mower 100 and the obstacle 200 is less than the first threshold distance. Then the mower 100 is controlled to perform the obstacle avoidance action, and this first threshold distance may be 0. For example, a collision sensor is arranged at the front end of the mower 100. When the mower 100 collides with the obstacle 200, the mower 100 is controlled to perform the obstacle avoidance action again, and since the mower 100 is too close to the obstacle 200 at this moment, a steering action cannot be flexibly performed. Therefore in the disclosure, the mower 100 is first controlled to retreat the first preset distance, and then the subsequent avoidance action is executed, so that a moving trajectory of the mower 100 may cover an area around the obstacle 200 as much as possible, and a grass leakage is reduced. A length of the first preset distance depends on motion parameters of the mower 100, for example, according to a whole size and a turning radius of the mower 100.

S30: creating the obstacle avoidance path for the mower 100, controlling the mower to rotate at a preset angle according to the obstacle avoidance path, and controlling the mower 100 to walk along the obstacle avoidance path until the mower 100 returns to the preset path L.

Please refer to FIG. 2. In an embodiment, it includes the following steps:
taking a pre-stored and estimated radius R as an obstacle avoidance distance, and creating the obstacle avoidance path according to the obstacle avoidance distance, wherein, it may be understood that, the obstacle described in the disclosure refers to the obstacle that appears in the working area temporarily, a size of the obstacle is not pre-stored in a path planning system in advance, the mower also cannot obtain a specific outline of the obstacle, under this premise, the disclosure first assumes an initial radius of an obstacle which means the estimated radius R, considering the environment, the temporary obstacle 200 that may appear is generally a human or a bucket, so the estimated radius R can be initially set from 40cm to 80cm, of course an initial value of the estimated radius R may also be set to other numerical values according to a difference conditions, the disclosure first calculates the obstacle avoidance path according to this estimated radius R, and when this obstacle avoidance path cannot completely avoid the obstacle, following steps are performed in circulation until the mower 100 returns to the preset path L;
controlling the mower 100 to walk along the obstacle avoidance path, detecting the front area of the mower 100 in a real-time, and determining whether there is the obstacle 200 in a third threshold distance in front of the mower 100;
when there is the obstacle 200 in the third threshold distance in front of the mower 100, controlling the mower 100 to retreat the second preset distance, adding a preset increment D to the obstacle avoidance distance as a new obstacle avoidance distance, and re-creating the new obstacle avoidance path according to the new obstacle avoidance distance.

In an embodiment, after the new obstacle avoidance path is re-planned according to the new obstacle avoidance distance, the mower 100 is controlled to drive into the new obstacle avoidance path from a current position of the robotic tool after the second preset distance is retreated. It may be understood that, when the new obstacle avoidance path creating is completed, a relative position between the mower and the new obstacle avoidance path is determined, and then there must be a shortest distance between the mower and the new obstacle avoidance path. The disclosure may control the mower to drive into the new obstacle avoidance path along this shortest distance for example, so as to improve obstacle avoidance efficiency. Of course, in order to simplify a calculation process, the mower may also drive into the new obstacle avoidance path according to a preset direction.

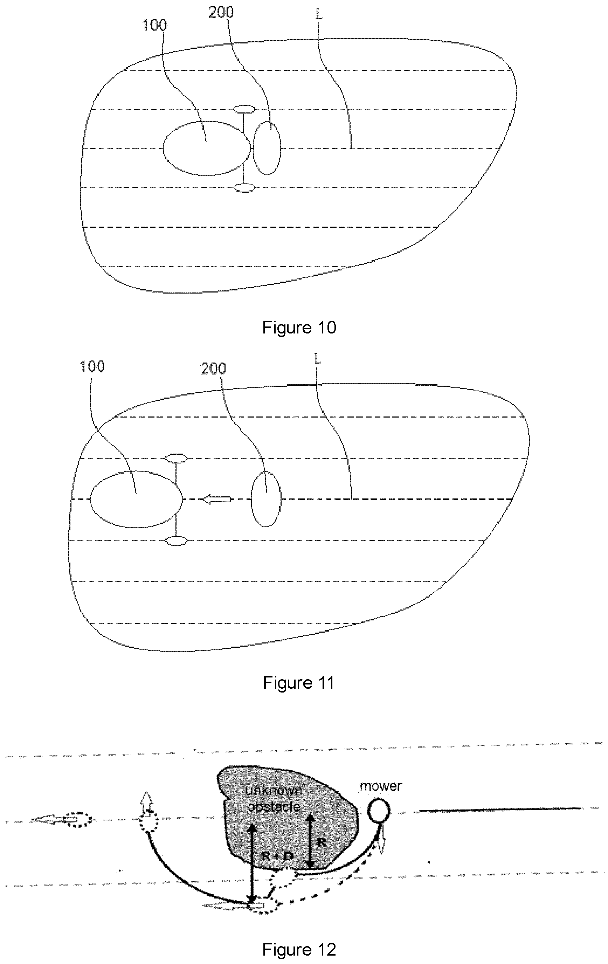

Please refer to FIG. 12. In an embodiment of the disclosure, creating the obstacle avoidance path includes:
**determining** a starting point, and a position where the mower 100 locates after retreating the first preset distance is the starting point;
determining a center of a circle, taking a point on the preset path L as the center of the circle, and enabling a distance between the center of the circle and the starting point to be equal to the obstacle avoidance distance, wherein, it may be understood that, an actual outline of the obstacle may not be circular, in order to simplify the calculation process, the outline of the obstacle is assumed to be a standard circular area, the circular area should be capable of covering the entire obstacle, the center of the circle of the obstacle avoidance path should coincide with an assumed center of the circle of the obstacle, a position of the center of the circle of the obstacle avoidance path may be determined by a following method: at first, the center of the circle must be located on the preset path L, and since the obstacle avoidance path passes through the starting point, a point in the first direction of the preset path L that is at a distance from the starting point equal to the obstacle avoidance distance is the position of the center of the circle;
determining a semicircular path according to the obstacle avoidance distance and the center of the circle, two ends of the semicircular path being respectively located on the preset path, and the semicircular path being the obstacle avoidance path.

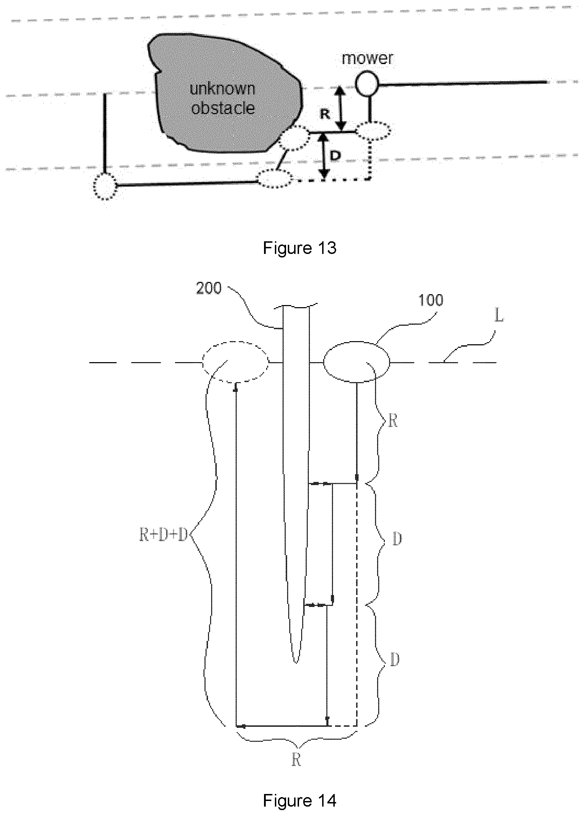

Please refer to FIG. 13. In another embodiment of the disclosure, the obstacle avoidance path may also be a straight path for example. In this embodiment, an obstacle avoidance process of the mower is as follows that the mower first moves a distance along a direction perpendicular to the preset path L, then moves along a direction parallel to the preset path L for a certain distance, and finally returns to the preset path L along the direction perpendicular to the preset path L again. A specific planning method of the obstacle avoidance path is as follows:
determining the starting point, and a position where the mower 100 locates after retreating the first preset distance is the starting point;
determining a first section, the first section being perpendicular to the preset path L, the starting point is a start point of the first section and a length of the first section is equal to the obstacle avoidance distance;
determining a second section, the second section being parallel to the preset path L, an end point of the first section is a start point of the second section and a length of the second section is equal to twice the obstacle avoidance distance;
determining a third section, the third section being perpendicular to the preset path L, an end point of the second section is a start point of the third section and a length of the third section is equal to the length of the first section.

The first section, the second section and the third section constitute the obstacle avoidance path.

**In** an embodiment, please refer to FIG. 14. When the mower 100 walking along the second section detects the presence of the obstacle 200 in the third threshold distance ahead, the preset increment D is added to the obstacle avoidance distance as the new obstacle avoidance distance, the length of the first section and the length of the third section are s equal to the new obstacle avoidance distance, and the length of the second section is set to be unchanged.

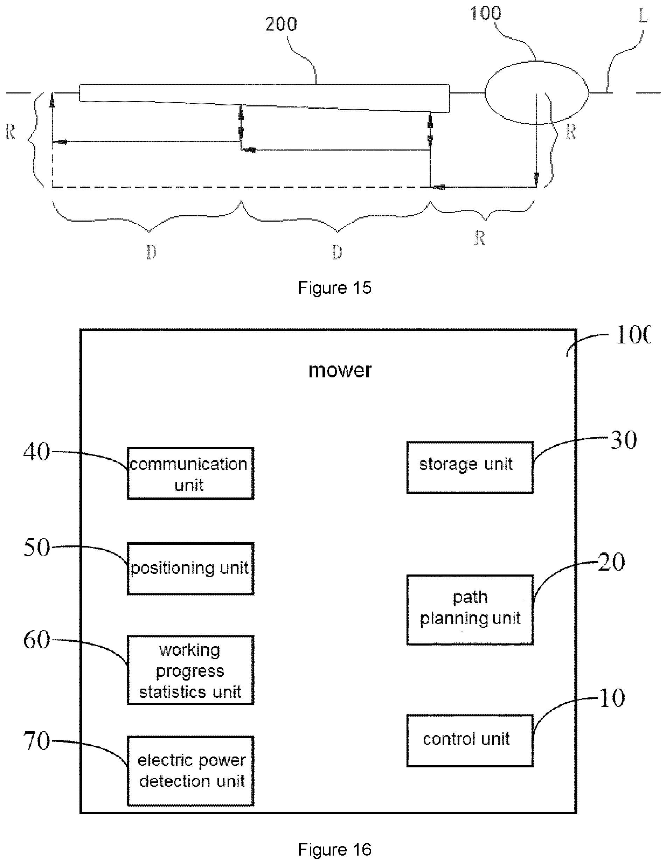

**Please** refer to FIG. 15. When the mower 100 moving along the third section detects the presence of the obstacle 200 in the third threshold distance ahead, the preset increment D is added to the obstacle avoidance distance as the new obstacle avoidance distance, the length of the second section is equal to the new obstacle avoidance distance, and the length of the first section and the length of the third section are remained to be unchanged.

It may be understood that, in this embodiment, a length of an avoidance path of the mower 100 in a perpendicular direction and in a parallel direction can be adjusted separately, so that a redundant trip can be effectively reduced. On one hand, the obstacle avoidance efficiency is improved, and on the other hand, the grass leakage can be further reduced.

S40: controlling the mower 100 to walk in a direction close to the obstacle 200 (which means controlling the mower to move in the second direction) until the distance between the mower 100 and the obstacle 200 is less than or equal to the second threshold distance (which means that the second stop event appears).

In an embodiment of the disclosure, S40 includes:
controlling the mower 100 to steer so as to enable the front end of the mower 100 to face the obstacle 200;
controlling the mower 100 to approach the obstacle 200 in a forward manner.

In another embodiment of the disclosure, S40 includes:
**controlling** the mower 100 to steer so as to enable a rear end of the mower 100 to face the obstacle 200;
**controlling** the mower 100 to approach the obstacle 200 in a backward manner.

**S50:** controlling the mower 100 to continue walking along the preset path L.

It may be understood that, the first threshold distance, the second threshold distance, the third threshold distance in the disclosure may be equal or unequal, and specific numerical values are determined by size parameters of the mower 100 and the outline of the possible obstacle 200.

In summary, when the mower 100 of the disclosure encounters the obstacle 200, it first controls the mower 100 to speed down and continue walking a distance, until a distance between the mower 100 and the obstacle 200 is less than the first threshold distance. Reducing the speed can prevent the mower from hitting the obstacle due to an excessive speed. Then the mower 100 is controlled to retreat the first preset distance, and then performs a follow-up avoidance action, so that the walking trajectory of the mower 100 can cover the area around the obstacle 200 as much as possible, which improves a mowing coverage rate.

The disclosure performs a cyclic planning to an avoidance path according to information of the obstacle 200 detected by the detection module 11, which reduces a complexity of the detection module 11 and an operation process, reduces an amount of calculation, improves a response speed, and reduces device cost.

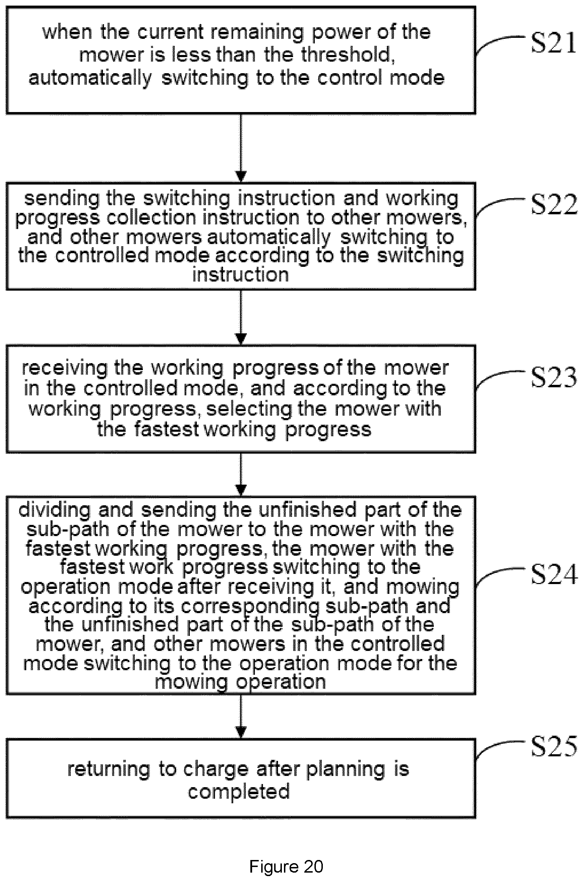

Please refer to FIG. 16 through FIG. 21. The disclosure further provides the control method and a mower system of the mower and the mower to a problem that multiple mowers cannot cooperate well, which results in duplication of work and waste of hardware resources, thus affecting work efficiency. In this embodiment, the mower system includes at least two mowers 100. The mower 100 can set up the working path according to a boundary map of the working area, and the working path is divided into different sub-paths according to a number of the mowers. At the same time, the mowers can interact with each other to transmit and receive working information. It may be understood that, the control method of a garden tool of the disclosure is not limited to be applied to multiple mowers. For example, the control method of the garden tool of the disclosure may further be applied to other types of robotic tools such as robotic snow blowers, robotic vacuums.

Please refer to FIG. 16 through FIG. 17. In this embodiment, the mower 100 includes a control unit 10, a path planning unit 20, a storage unit 30 and a communication unit 40. The mower is provided with a control mode, a controlled mode and an operation mode. In an embodiment, the control unit 10 is used for controlling the mower to mow along the sub-path and is used for controlling the mower to switch among the control mode, the controlled mode and the operation mode. The mower currently is a control mower in the control mode, and the mower currently in the controlled mode is a controlled mower. When the mower is in the control mode, the mower can send instructions to other mowers. When the mower is in the controlled mode, the mower can receive instructions. When the mower is in the operation mode, the mower works normally.

Please refer to FIG. 16 through FIG. 17. In this embodiment, the mower works in the working area 1, and the boundary map of the working area may be automatically downloaded from a database by the mower or created by driving the mower. The path planning unit 20 is connected with the control unit 10 for planning the working path of the mower in a working area boundary, and the working path may also be divided into a plurality of sub-paths according to the number of the mowers, so that different mowers can mow grass along different sub-paths. The storage unit 30 is connected with the control unit 10 and the path planning unit 20 for storing the boundary map of the working area and dividing the working path into the plurality of sub-paths. The communication unit 40 is connected with the control unit 10, the path planning unit 20 and the storage unit 30 for interacting with other mowers to transmit and receive working information between the control mower and the controlled mower. In this embodiment, the communication unit 40 is a wireless transmission unit. In addition, the working information includes the boundary map, the working path divided into different sub-paths, a working progress of the mowers, switching instructions, working switching instructions and working progress collection instructions.

Please refer to FIG. 16 through FIG. 17. In this embodiment, the mower 100 further includes a positioning unit 50. The positioning unit 50 is an RTK positioning unit. The RTK positioning unit utilizes RTK differential information of a wireless receiving base station to realize a precise positioning, so as to facilitate the mower to mow along its working path.

Please refer to FIG. 16 through FIG. 17. In this embodiment, the mower further includes a working progress statistics unit 60 and an electric power detection unit 70. The working progress statistical unit 60 is used for counting the working progress of the mower, the electric power detection unit 70 is used for detecting a current power of the mower, and if the current power is less than a preset threshold value, the power of this mower is insufficient.

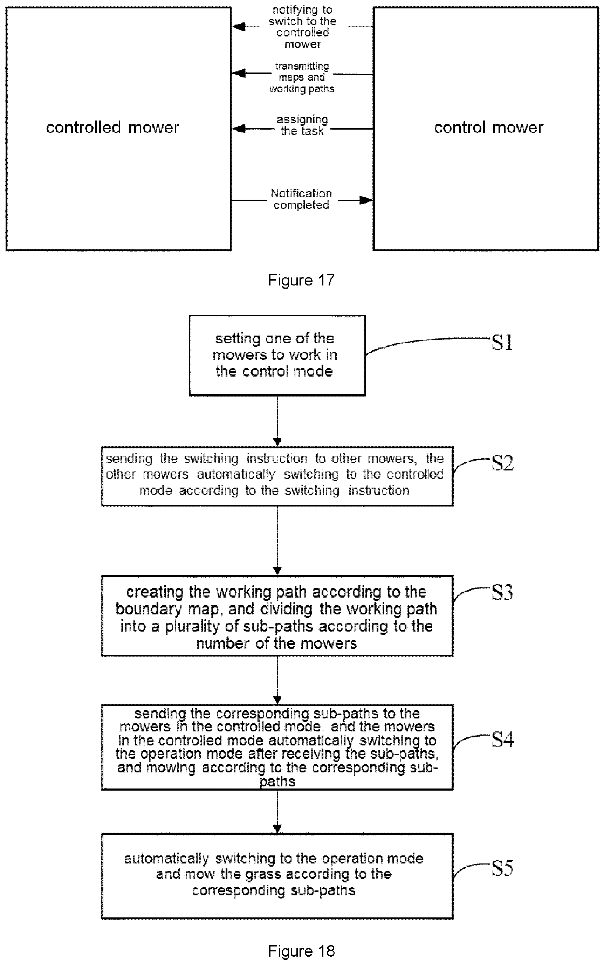

Please refer to FIG. 18. In this embodiment, the control method of the mower can coordinate the plurality of the mowers to mow and avoids repeated work among the plurality of the mowers, which causes waste of hardware resources and affects the work efficiency. The boundary map is stored in the mower, and multiple mowers perform the mowing operations on the working area at the same time. The mower has three different working modes, respectively the control mode, the controlled mode and the operation mode. The mower can be switched among the three working modes, the mower working in the control mode is defined as the control mower, and the mower working in the controlled mode is defined as the controlled mower.

Please refer to FIG. 18. A working method includes:
**S1:** determining one of the mowers in the control mode;
**S2:** sending the switching instruction to other mowers, switching the other mowers to the controlled mode according to the switching instruction;
**S3:** creating the working path according to the boundary map, and dividing the working path into the plurality of sub-paths according to the number of the mowers;
**S4:** sending the corresponding sub-paths to the other mowers, and switching the other mowers from the controlled mode to the operation mode after receiving the sub-paths, and mowing according to the corresponding sub-paths;
**S5:** switching the control mower to the operation mode and mowing the grass according to the corresponding sub-paths.

Please refer to FIG. 18. In S1 and S2, one mower is determined to the control mode to enable this mower to be the control mower, the control mower sends the switching instruction to the other mowers through the communication unit 40, and the other mowers automatically switch to the controlled mode as the controlled mowers according to the switching instruction.

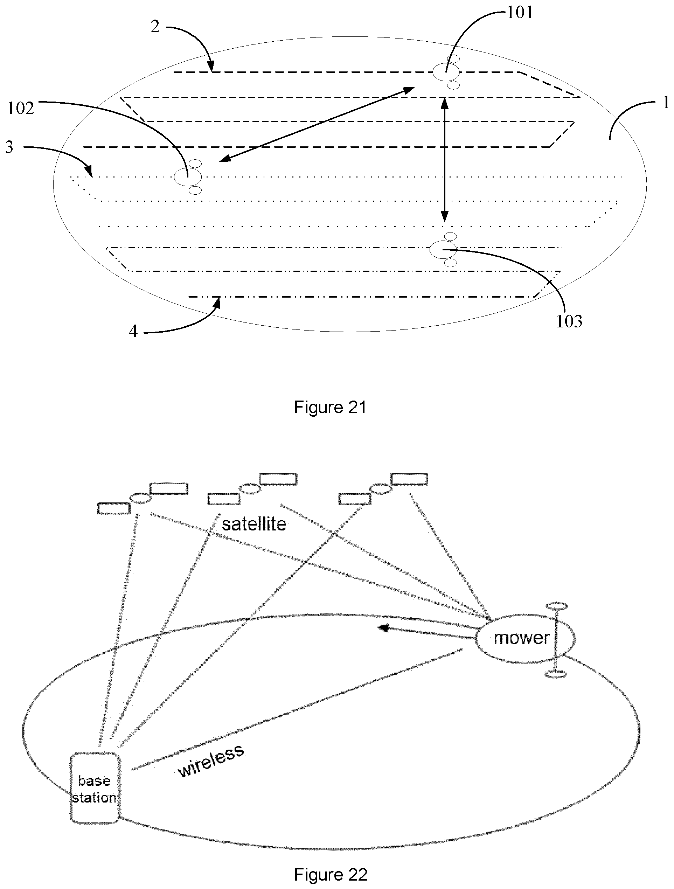

Please refer to FIG. 18 and FIG. 21. In S3, the boundary map is stored in the control mower. The control mower plans the working path of the mower according to the boundary map, the control mower also divides the planned working path into the plurality of sub-paths according to the number of the mowers, each sub-path is numbered, and a number of the sub-paths corresponds to the number of the mowers.

Please refer to FIG. 18 and FIG. 21. In some embodiments, the control mower sends the switching instruction to other mowers, and the other mowers automatically switch to the controlled mode as the controlled mowers according to the switching instructions, and give a feedback signal to the control mower so that the control mower can obtain the number of the mowers, which matches a division of the working path.

Please refer to FIG. 18 and FIG. 21. For example, there are three mowers, which includes a first mower 101, a second mower 102 and a third mower 103. Wherein, the first mower 101 is in control mode and determined as the control mower, then the first mower 101 sends the switching instruction to the second mower 102 and the third mower 103, so that the second mower 102 and the third mower 103 are in the controlled mode as the controlled mowers. Then the first mower 101 divides the planned working path into three sections, corresponding to a first sub-path 2, a second sub-path 3 and a third sub-path 4 respectively, and the sub-paths of each mower do not coincide. In this embodiment, the boundary map and the working path that is divided into different sub-paths are stored in the storage unit 30, and a creating of the working path and a division of the sub-paths are realized through the path planning unit 20.

Please refer to FIG. 18 and FIG. 21. In this embodiment, in S4: the corresponding sub-paths are sent to the mowers in the controlled mode, and switch the controlled mowers to the operation mode after receiving the sub-paths, and mow according to the corresponding sub-paths.

The first mower 101 sends the boundary map and the corresponding sub-paths to the second mower 102 and the third mower 103 and stores them in the storage unit 30 of the mowers, and the first mower 101 is further used for assigning a sub-path to work to each controlled mower and itself. Each mower corresponds to a numbered sub-path, for example, the first sub-path 2 is assigned to the first mower 101, the second sub-path 3 is assigned to the second mower 102, and a third working path 4 is assigned to the third mower 103. The second mower 102 and the third mower 103 automatically switch to the operation mode after receiving their respective sub-paths of work, and mow according to the corresponding sub-paths, which means that the second mower 102 mows along the second sub-path 3, and the third mower 103 mows along the third sub-path 4. In this embodiment, the control mower transmits the boundary map and the working path divided into different sub-paths to the controlled mower through the communication unit 40, and notifies the other mowers to switch modes or work through the communication unit 40. In an embodiment of the disclosure, when the mower is in the control mode or the controlled mode, a cutting blade of the mower stops working, so as to save energy and avoid an influence on an interaction signal.

Please refer to FIG. 18 and FIG. 21. In S5, the mower switches to the operation mode and mows according to the corresponding sub-paths. The first mower 101 switches to the operation mode after completing a task assignment, and mows according to its corresponding sub-paths, which means that the first mower 101 mows along the first sub-path 2.

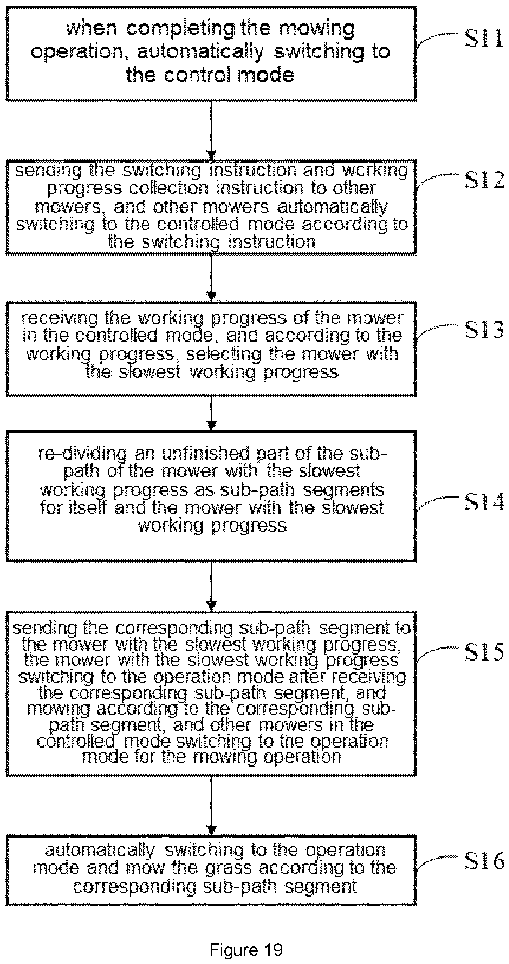

Please refer to FIG. 19 and FIG. 21. In this embodiment, the control method of the mower further includes: when in the operation mode, counting a current working progress of the mower. If a mower completes a current work task, the mower that completes the task switches to the control mode as the control mower, and selects the mower that needs help to reassign the work task. In an embodiment, selecting the mower that needs help to reassign the work task includes:
**S11:** when any mower completes the mowing operation, automatically switching to the control mode;
**S12:** counting working progress of other mowers, and switching other mowers to the controlled mode;
**S13:** receiving the working progress of the mower in the controlled mode, and according to the working progress, determining the mower with the slowest working progress;
S14: re-dividing an unfinished part of the sub-path of the mower with the slowest working progress as sub-path segments for the control mower and the mower with the slowest working progress;
S15: sending the corresponding sub-path segment to the mower with the slowest working progress, switching the mower with the slowest working progress to the operation mode after receiving the corresponding sub-path segment, and mowing according to the corresponding sub-path segment, and other mowers in the controlled mode switching to the operation mode;
S16: switching the control mower from the control mode to the operation mode and mowing according to the corresponding sub-path segment.

Please refer to FIG. 19 and FIG. 21. In S11 and S12, when the mower completes the mowing operation, the mower automatically switches to the control mode as the control mower, and the other mowers automatically switch to the controlled mode as the controlled mower after receiving the switching instruction from the control mower. It should be noted that, the mower switched to the control mode may be any of the mowers in the working process, as long as its current work task is completed. For example, in S4 and S5, each mower mows along the sub-path that it is assigned to. When one of the mowers completes the work task that is assigned to it at present, this mower automatically switches to the control mode as the control mower, and sends the switching instruction and working progress collection instruction to other mowers by the communication unit 40.

Please refer to FIG. 19 and FIG. 21. In S13 and S14, all of the controlled mowers that switching to the controlled mode upload their current working progress to the control mower and store them in the storage unit 30. The control mower selects the mower with the slowest working progress according to the working progress, re-divides the unfinished part of the sub-path of the mower with the slowest working progress as the sub-path segments for itself and the mower with the slowest working progress, and assigns mowing tasks to provide assistance.

Continuing with the above embodiment, when the first mower 101 switches to the control mode as the control mower after completing the mowing task, and the second mower 102 and the third mower 103 are controlled to switch to the controlled mode as the controlled mowers, and the second mower 102 and the third mower 103 upload their current working progress to the first mower 101. The first mower 101 selects the mower with the slowest working progress, for example, the second mower 102, which means that the first mower 101 re-divides the unfinished part of the second sub-path 3 of the second mower 102 into the sub-path segments corresponding to itself and the second mower 102.

In S15, the control mower sends the corresponding sub-path to the mower in the controlled mode with the slowest working progress, the mower in the controlled mode with the slowest working progress switches to the operation mode after receiving the corresponding sub-path, and mows according to the sub-path. Continuing with the above embodiment, the first mower 101 re-divides the unfinished second sub-path 3 into a plurality of the sub-path segments, and sends corresponding sub-path segments to the second mower 102 in the controlled mode. The second mower 102 in the controlled mode switches to the operation mode after receiving the corresponding sub-path segment, and mows according to the sub-path segment. At this time, other mowers in the controlled mode switch to the operation mode for the mowing operation.

In S16, the control mower automatically switches to the operation mode and mow according to the corresponding sub-paths. For example, the first mower 101 automatically switches to the operation mode after completing the task assignment, and mow according to the corresponding sub-paths.

In this embodiment, a method of the mower switching to the operation mode includes that, the mower in the controlled mode switches to the operation mode after receiving a working switching instruction sent by the mower in the control mode, or when a duration of the mower in the controlled mode is greater than a first preset value, the mower automatically switches to the operating mode and continues the mowing operation. It should be noted that, the first preset value is greater than a time T, and the time T is the time it takes for the mower in the control mode in S12 to send the switching instructions to other mowers until the mower with the slowest working progress receives the corresponding sub-path segment in S15.

Please refer to FIG. 16 through FIG. 18, FIG. 20 and FIG. 21. In this embodiment, the control method of the mower further includes: when in the operation mode, detecting current remaining power of the mower. When the power of the mower is insufficient, it will switch to the control mode as the control mower, select an optimal mower to help itself to complete the work, and return to charge. In an embodiment, an operation of selecting the optimal mower to help itself to complete the work, and returning to charge includes:
**S21:** when the current remaining power of the mower is less than the threshold, automatically switching to the control mode;
**S22:** sending the switching instruction and working progress collection instruction to other mowers, and other mowers automatically switching to the controlled mode according to the switching instruction;
**S23:** receiving the working progress of the mowers in the controlled mode, and according to the working progress, selecting the mower with the fastest working progress;
**S24:** dividing and sending the unfinished part of the sub-path of the mower to the mower with the fastest working progress, the mower with the fastest working progress switching to the operation mode after receiving it and mowing according to its corresponding sub-path and the unfinished part of the sub-path of the mower, and other mowers in the controlled mode switching to the operation mode for the mowing operation;
**S25:** returning to charge.

Please refer to FIG. 16 through FIG. 18, FIG. 20 and FIG. 21. In S21 and S22, when the current remaining power of the mower is less than the threshold, the mower automatically switches to the control mode, and sends the switching instruction and working progress collection instruction to other mowers, and other mowers automatically switch to the controlled mode according to the switching instruction. Continuing with the above embodiment, when a power of the first mower 101 is insufficient, which means that a current remaining power of the first mower 101 is less than the threshold, the first mower 101 automatically switches to the control mode as the control mower, and sends the switching instructions and the working progress collection instructions to the second mower 102 and the third mower 103, so that the second mower 102 and the third mower 103 switch to the controlled mode as the controlled mowers, and their working progresses are sent to the first mower 101.

In S23 and S24, the mower in the control mode receives the working progress of the mower in the controlled mode, and according to the working progress, the mower in the control mode selects the mower with the fastest working progress, divides and sends the unfinished part of the sub-path of the mower to the mower with the fastest working progress. The mower with the fastest working progress switches to the operation mode after receiving the unfinished part of the sub-path of the mower, and mows according to its corresponding sub-path and the unfinished part of the sub-path of the mower, and other mowers in the controlled mode switch to the operation mode for the mowing operation.

Continuing with the above embodiment, the first mower 101 receives the working progresses of the second mower 102 and the third mower 103. According to the working progresses of the second mower 102 and the third mower 103, the mower in the control mode selects the mower with the fastest working progress, for example, the second mower 102, divides and sends the unfinished part of the sub-path of the first mower 101 to the second mower 102. The second mower 102 switches to the operation mode after receiving the unfinished part of the sub-path of the first mower 101, and mows according to its corresponding sub-path and the unfinished part of the sub-path of the mower, so that the second mower 102 helps the first mower 101 to continue to complete its unfinished part. In some embodiments, the second mower 102 first continues to mow along the second sub-path 3 corresponding to itself, and after completing the work task of the second sub-path 3, the second mower 102 continues to mow along the unfinished part of the first sub-path 2 corresponding to the first mower 101. At this time, other mowers in the controlled mode switch to the operation mode for the mowing operations.

In S25, after the creating is completed, the mower returns for charging, which means that the unfinished part of the sub-path of the mower is divided and sent to the mower with the fastest working progress and then this mower returns for charging. For example, after the first mower 101 sends the unfinished part of the corresponding first sub-path 2 to the second mower 102, the first mower 101 returns for charging.

In this embodiment, the method of the mower switching to the operation mode includes that, the mower in the controlled mode switches to the operation mode after receiving the working switching instruction sent by the mower in the control mode, or when the duration of the mower in the controlled mode is greater than a second preset value, the mower automatically switches to the operating mode and continues the mowing operation. It should be noted that, the second preset value is greater than a time T2, and the time T2 is the time it takes for the mower in the control mode in S22 to send the switching instructions to other mowers until the mower with the fastest working progress receives the unfinished part of the sub-path of the control mower in S24.

The disclosure provides the control method of the mower, the mower system and the mower. The mower can automatically identify and switch between the control mode and the controlled mode. The mower in the control mode may plan the working path, and divide the working path into a corresponding number of the sub-paths according to the number of mowers. The mower in the control mode can transmit map information, working path information and mower information to the mower in the controlled mode, and can assign tasks to each controlled mower, which improves the work efficiency of multiple mowers. And any mower may become the control mower when needed, which improves the work efficiency of the mower and eliminates a need for a new mower mapping work.

**At** present, the garden tool improves a positioning accuracy by receiving RTK (real-time kinematic, real-time differential positioning) information, while RTK communication of the base station and the garden tool mostly includes 4G, radio or Bluetooth. 4G traffic is expensive, a signal of 4G is unstable, and data transmission volume of the radio station is low. Due to a short wavelength, a point-to-point transmission of Bluetooth is greatly affected by an obstruction of buildings, trees, etc., and it is easy to create a signal weak area.

Please refer to FIG. 22 through FIG. 28. The disclosure provides the garden tool and its communication, positioning system thereof and communication, positioning, control method thereof, which eliminates the signal weak area by a mode of RS forwarding, and improves a communication quality between the garden tool and the base station. A specific content of the disclosure is described in detail in conjunction with the mower below. It may be understood that, in addition to the mower, the disclosure can further be applied to other garden tools such as snow blowers. A communication system of the mower includes the base station 400, the mower 100 and at least one wireless communication relay station (RS) 300.

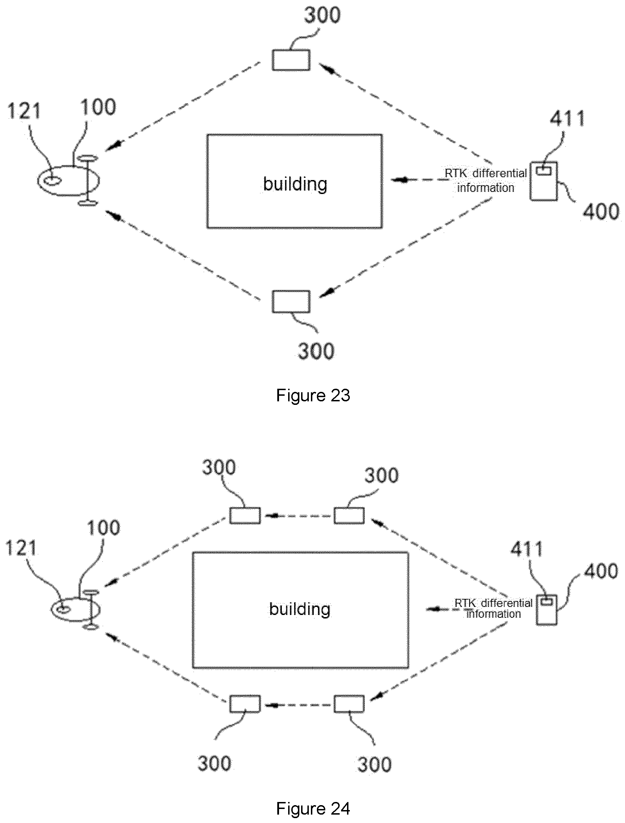

Please refer to FIG. 23, FIG. 24, FIG. 27 and FIG. 28. The base station 400 includes a first wireless communication module 411 and the mower 100 includes a second wireless communication module 121. The RS 300 is communicated with the first wireless communication module 411, and a sum of signal coverage areas of the first wireless communication module 411 and the RS 300 includes at least an entire working area of the mower 100, so that when the mower 100 is at any position in the working area, the second wireless communication module 121 can be at least communicated with the first wireless communication module 411 and/or the RS 300.

Please refer to FIG. 23 and FIG. 24. It should be noted that, the first wireless communication module 411, the second wireless communication module 121 and the RS 300 of the disclosure are mainly used for a transmission of short-wavelength signal, for example may be used for Bluetooth, WIFI and the like. This kind of signal is relatively stable in a short-distance transmission process, data transmission amount is large, and the communication efficiency is high. However, the working area of the mower 100 is generally also distributed with obstacles such as buildings, trees, these obstacles can affect the transmission of short-wavelength signal, and the signal weak area is appeared. A mode of the RS 300 to forward the signal of the disclosure, can enable the signal to bypass the obstacle, and ensure a stable signal and a reliable propagation.

Please refer to FIG. 23 and FIG. 24. It may be understood that, since electromagnetic wave signals undergo a gradual attenuation process during the propagation, the signal coverage area in the disclosure should refer to an area whose signal strength can meet normal communication requirements.

Please refer to FIG. 23. In an exemplary embodiment of the disclosure, there is a plurality of RS 300, and each RS 300 is communicated with the first wireless communication module 411 respectively. It may be understood that, as an extension of the embodiment, please refer to FIG. 24. When the mower 100 is insufficient to establish a communication connection with the base station 400 through one RS 300, the disclosure may set up the plurality of RS 300, so that each RS 300 is communicated with each other, and at least one of the RS 300 is communicated with the first wireless communication module 411. The mower 100 establishes the communication connection with the base station 400 through forwarding of the plurality of RS 300.

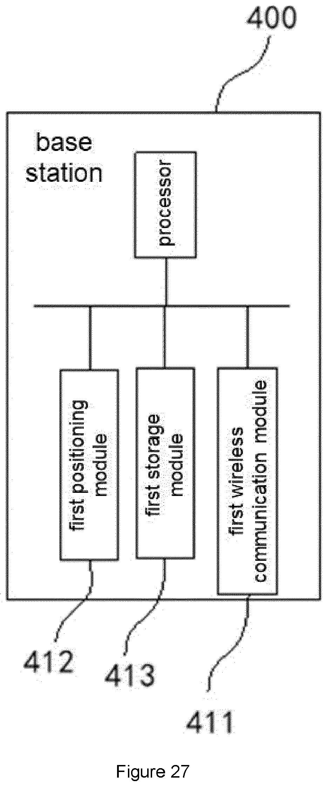

Please refer to FIG. 27. The base station 400 further includes a first positioning module 412, and in an exemplary embodiment of the disclosure, the first positioning module 412 may, for example, be a GPS module.

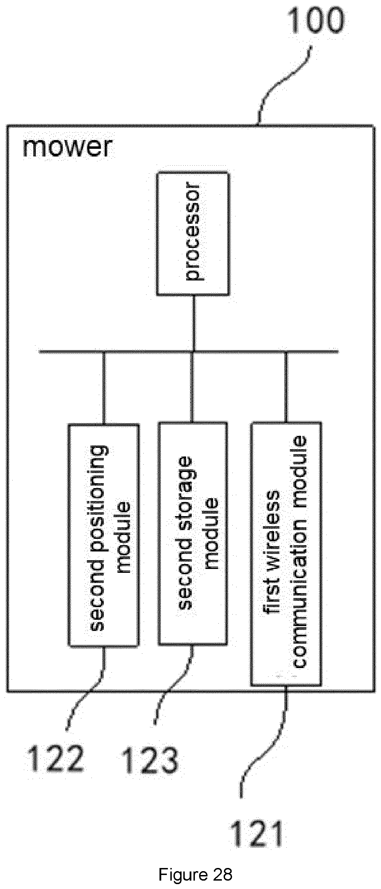

Please refer to FIG. 28. The mower 100 further includes a second positioning module 122, and in an exemplary embodiment of the disclosure, the second positioning module 122 may, for example, be the GPS module.

Please refer to FIG. 28. The mower 100 further includes a second storage module 123, the second storage module 123 stores position information of the RS 300 and the base station 400, and the position information may be coordinate data, for example.

When the mower is located in a signal coverage range of the plurality of RSs, the mower selects the RS with a shortest delay therein to be communicated with the base station. When the base station 400 transmits a signal, a time stamp is added to the signal. The mower 100 determines a delay of each signal based on a time of each received signal, and selects a signal propagation path with a lowest delay for communication. In an embodiment, the base station transmits the signal outward through the first wireless communication module 411 and adds the time stamp to the signal. The RS receives and forwards the signal transmitted by the first wireless communication module 411. The garden tool receives all signals whose threshold value is greater than the preset value from the first wireless communication module 411 and the RS 300 through the second wireless communication module 121. It should be noted that, in the disclosure, the threshold value all refers to an intensity threshold of the signal, and its unit may be, for example, dBm (decibel milliwatts). The mower 100 screens out an error signal through a signal screening module, and selects the signal with the latest time stamp as a use signal in the remaining signals. It should be noted that, the error signal refers to a signal with a data error caused by a signal interference, and a screening of the error signals and a selection of the latest signal may be realized by a conventional software and hardware, which is not repeated here.

Please refer to FIG. 22 through FIG. 24. Based on the communication system mentioned above, the disclosure further provides a positioning system of the mower, which includes the base station 400, the mower 100 and the RS 300.

Please refer to FIG. 22 through FIG. 24. The base station 400 includes a first positioning module 412 and the first wireless communication module 411 for transmitting the RTK differential information.

Please refer to FIG. 22 through FIG. 24. The mower 100 includes the second wireless communication module 121 for receiving the RTK differential information, a second positioning module 122, and a data processing module. The second wireless communication module 121 and the first positioning module 412 are connected with the data processing module.

Please refer to FIG. 22 through FIG. 24. The RS 300 is communicated with the first wireless communication module 411.

Please refer to FIG. 22 through FIG. 24. The sum of signal coverage areas of the first wireless communication module 411 and the RS 300 includes at least the entire working area of the mower 100, so that when the mower 100 is at any position in the working area, the second wireless communication module 121 can be at least communicated with the first wireless communication module 411 and/or the RS 300.

Please refer to FIG. 22. It should be noted that, RTK differential positioning technology is a real-time differential GPS technology based on carrier phase observation, which includes three parts: a standard station receiver, a data link and a mobile station receiver. A receiver is placed as a reference station on the standard station to observe a satellite continuously, and sent its observation data and station information to a mobile station in real time through a radio transmission device. The mobile station GPS receiver receives a GPS satellite signal, at the same time, it receives the data transmitted by the standard station through a wireless receiving device, and then calculates three-dimensional coordinates and accuracy of the mobile station in real time according to a principle of relative positioning. In this embodiment, the base station 400 is used as the standard station, and the mower 100 is used as the mobile station. The embodiment mainly describes an application of the communication system in a positioning of the mower 100, and utilizes the communication system to transmit the RTK differential information, so that the mower 100 can obtain highprecision positioning data at any position in the working area, which provides a parameter basis for a precise control of the mower 100.

Please refer to FIG.27 and FIG. 28. The base station 400 further includes a first storage module 413, the first storage module 413 stores the position information of the base station 400, and the position information may be the coordinate data, for example. The mower 100 further includes the second storage module 123, the second storage module 123 stores the position information of the RS 300 and the base station 400, and the position information may be the coordinate data, for example.

It may be understood that, in an exemplary embodiment of the disclosure, when the mower is located in the signal coverage range of the plurality of RSs, the mower selects the RS with the shortest delay therein to be communicated with the base station. When the base station 400 transmits the signal, the timestamp is added to the signal. The mower 100 determines the delay of each signal based on the time of each received signal, and selects the signal propagation path with the lowest delay for communication.

Based on a principle of RTK differential positioning technology, the RTK differential information should include the observation data and actual data of coordinates of the base station 400. The first positioning module 412 obtains the observation data through a real-time observation, and then the observation data and the actual data pre-stored in the first storage module 413 are sent to the mower 100, and the mower 100 combines the RTK differential information according to real-time observation data of the second positioning module 122, and calculates exact coordinates of the mower 100 in real time. It may be understood that, a solution process is completed by a processor, and the second storage module 123 further includes a computer program for the solution process.

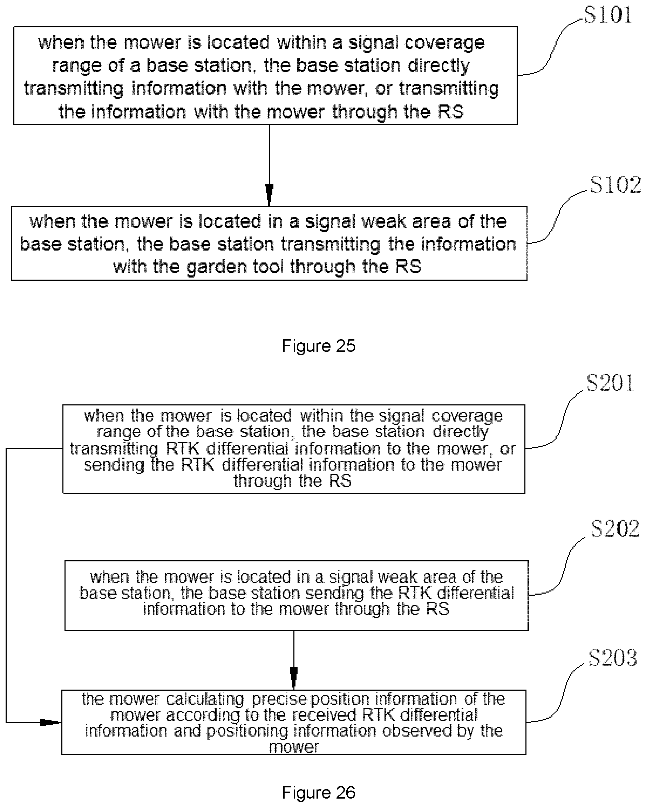

Please refer to FIG. 25. Based on the communication system, the disclosure further provides a communication method of the mower 100 for information transmission between the mower 100 and the base station 400, which includes:
**S101:** when the mower 100 is located within a signal coverage range of a base station, the base station 400 directly transmitting information with the mower 100, or transmitting information with the mower 100 through the RS 300;
S102: when the mower 100 is located in a signal weak area of the base station 400, the base station 400 transmitting information with the garden tool 20 through the RS 300.

Please refer to FIG. 23 and FIG. 24. In an exemplary embodiment of the disclosure, the base station 400 transmits the information with the mower 100 through the forwarding of at least one RS 300. For example, the plurality of RSs 300 may be arranged, and each RS 300 is respectively located in the signal coverage area of the base station 400. It is foreseeable that, as an extension of the embodiment, each RS 300 is connected in communication with each other, and at least one RS 300 is located in the signal coverage area of the base station 400.

When the base station 400 transmits information with the mower 100 through a plurality of forwarding paths consisting of the RS 30 the base station 400 selects a forwarding path with the lowest delay to transmit information with the mower 100. When the base station 400 transmits the signal, the timestamp is added to the signal. The mower 100 determines the delay of each signal based on the time of each received signal, and selects the signal propagation path with the lowest delay for communication.

Based on the above positioning system, the disclosure further provides a positioning method of the mower 100, which includes:
the base station 400 sending the RTK differential information to the mower 100, specifically:
**S201:** when the mower 100 is located within the signal coverage range of the base station 400, the base station 400 directly transmitting RTK differential information to the mower 100, or sending the RTK differential information to the mower 100 through the RS 300;
**S202:** when the mower 100 is located in a signal weak area of the base station 400, the base station 400 sending the RTK differential information to the mower 100 through the RS 300;
**S203:** the mower 100 calculating precise position information of the mower 100 according to the received RTK differential information and positioning information observed by the mower 100.

In an embodiment, when the base station sends the RTK differential information, the time stamp is added to the RTK differential information. The mower 100 receives all RTK differential information from the base station and the RS whose threshold value is greater than the preset value. The mower screens the received RTK differential information, eliminates incorrect RTK differential information, and selects the latest RTK differential information of the time stamp in the remaining RTK differential information. The mower calculates the precise position information of the garden tool according to the latest RTK differential information of the time stamp and the positioning information that the garden tool observes.

In summary, the disclosure utilizes the RS 300 to forward the signal of the base station 400, which avoids the obstacle to cause blocking to the signal, and enables the mower 100 to realize a reliable communication with the base station 400 at any position in the working area. The disclosure utilizes the RS to ensure that the mower 100 can receive the RTK differential information of the base station 400 at any position in the working area, which realizes the precise positioning of the mower 100 at any position. The RS 300 of the disclosure can extend the signal coverage range of the base station 400. Under a premise of guaranteeing a communication quality, an effective working range of the mower 100 can be increased.

**Garden** tools such as mowers occasionally have some other situations in the working process. For example, when the working area has a certain slope, the mower may deviate from a planned path due to inertia, or even drive outside the preset working area, and then the mower can no longer be effectively controlled. Another example is that the mower may be lifted by pedestrians during operation, and if the mower continues to run, it may cause injury to pedestrians. In addition, the mower may further have other abnormal states such as collision, overturning. Traditional control systems of the garden tool often give a simple determination through a sensor signal when determining the above-mentioned abnormal state. When the controller itself fails or the determination is delayed due to a shortage of computing power, it is impossible to deal with dangerous working conditions in time.

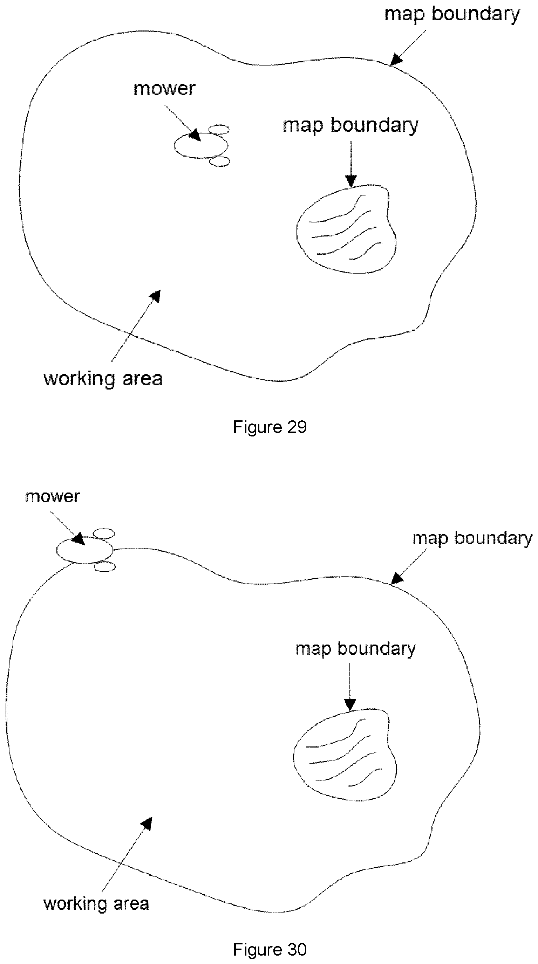

Please refer to FIG. 29 through FIG. 38. The disclosure provides a safety control system, a safety control method of the garden tool and the mower that can improve safety. The following disclosure combines an application of safety control system of the garden tool in the mower, and a technical scheme of the disclosure is described in detail. It may be understood that, the safety control method of the garden tool of the disclosure is not limited to being applied to the mowers. For example, the safety control method of the garden tool of the disclosure may further be applied to other types of robotic tools such as robotic vacuum, robotic snow blowers.

Please refer to FIG. 29 through FIG. 38. The mower includes a state detection module 161, a bottom control module 162, an algorithm control module 163 and an action execution module 164. The action execution module 164 may include a walking driving module 1641 and a cutter driving module 1642 for example. It may be understood that, the disclosure only describes the module related in a safety control process, and the actual mower should further include other hardware parts such as vehicle body, wheels, etc. The disclosure does not repeat these hardware parts.

In an embodiment, the state detection module 161 is used for detecting real-time working state information of the mower. It may be understood that, the working state information may include, for example, the position information and driving state information, etc. of the mower. The driving state information may include, for example, whether the mower touches an obstacle, whether the mower leaves a ground and the like.

The bottom control module 162 is connected with the state detection module 161 to obtain the real-time working state information, and the bottom control module 162 is configured to be capable of comparing the real-time working state information with the preset working state information to determine whether the mower has abnormal state information.

It may be understood that, the bottom control module 162 is mainly used for processing some simple control logic, such as controlling the mower to walk and an onoff of a cutter according to a preset map boundary and a driving path, and a control program that the bottom control module 162 executes is relatively simple, so it has an advantage of fast response speed.

It may be understood that, the preset state information refers to a planned working state of the mower, such as the planned driving path of the mower, the planned working area of the mower, etc. In addition, condition information such as the mower does not collide, the mower does not leave the ground, may also be included in the preset working state information.

It may be understood that, the abnormal state information refers to information generated when the current working state of the mower violates the preset working state, and the abnormal state information may include information that the mower deviates from the preset driving path, the mower exceeds a boundary of the preset working area, the mower collides and the mower leaves the ground and the like.

It may be understood that, when one or more of the above abnormal state information appears in the mower, it means that the mower itself or a surrounding environment has produced potential safety hazards.

**The** algorithm control module 163 is connected with the bottom control module 162, and the algorithm control module 163 is configured such that when a result of comparing the real-time working state information with the preset working state information is that there is no abnormal state information, the algorithm control module 163 can compare the real-time working state information with calculating working state information to determine whether the mower has abnormal state information for a second time. The calculating working state information refers to the working state information after the algorithm control module 163 adjusts the preset working state according to environmental changes. It may be understood that, the algorithm control module 163 is used for processing some complex control logic, such as automatically creating the driving path of the mower according to the map boundary information and the current position of the mower, or updating the map boundary and the driving path in real time according to a temporary obstacle distribution that appears in the working area. The algorithm control module 163 can make a secondary determination on the abnormal state information of the mower according to the real-time working state and the real-time working environment of the mower, and a determination result has higher accuracy.

The action execution module 164 is connected with the bottom control module 162 and the algorithm control module 163. When the mower has abnormal state information, the bottom control module 162 or the algorithm control module 163 controls the operation execution module 164 to perform a safety emergency operation. Please refer to FIG. 35 and FIG. 36. In an exemplary embodiment, the action execution module 164 includes the walking driving module 1641 and the cutter driving module 1642. When the mower is in the abnormal working state, the bottom control module 162 or the algorithm control module 163 can control the walking driving module 1641 and the cutter driving module 1642 to shut down, which contains existing safety hazards in time and avoids potentially dangerous incidents.

Please refer to FIG. 31, FIG. 33 and FIG. 35. In an exemplary embodiment, for example, the state detection module 161 may be connected only with the bottom control module 162. In this embodiment, the algorithm control module 163 may obtain the working state information of the mower detected by the state detection module 161 through the bottom control module 162.

Please refer to FIG. 32, FIG. 34 and FIG. 36. In another embodiment, for example, the state detection module 161 may further be connected with the bottom control module 162 and the algorithm control module 163, so that the algorithm control module 163 can directly obtain the working state information from the state detection module 161.

Please refer to FIG. 33 and FIG. 34. In an exemplary embodiment, the state detection module 161 may include, for example, a third positioning module 1611, and the third positioning module 1611 is used for obtaining real-time position information of the mower. The bottom control module 162 is configured to be capable of storing the preset working state information, and the preset working state information includes at least the map boundary information of the preset working area of the mower.

Please refer to FIG. 38. The map boundary information may be obtained, for example, by a following method:
S601: defining the boundary of the working area by driving the mower through the operator's hand push control or remote control, and the bottom control module 162 collecting satellite position information and transmitting it to the algorithm control module 163;
S602: receiving the position information and establishing the map and boundary by the algorithm control module 163, planning the path and transmitting key boundary information to the bottom control module 162;
S603: receiving the key boundary information and storing it in FLASH by the bottom control module 162;
S604: completing the map defining.

It may be understood that, the above method can flexibly set the preset working area of the mower, rather than limiting the preset working area to a specific area.

The map boundary information includes a variety of information, such as an outer boundary of the working area, obstacles, etc., wherein the key boundary information is the outer boundary of the working area, and the bottom control module 162 only receives the key boundary information. In this way, the bottom control module 162 is avoided from performing complex calculations.

Please refer to FIG. 37. The bottom control module 162 is configured to be capable of determining whether the mower is out of the boundary according to the real-time position information of the mower and the map boundary information, and if it is out of boundary, there will be the abnormal state information.

Please refer to FIG. 33 and FIG. 34. In an exemplary embodiment, the mower further includes an obstacle detection module 165. The obstacle detection module 165 is connected with the algorithm control module 163, and the obstacle detection module 165 is configured to be capable of detecting temporary obstacles in the working area of the mower. It may be understood that, in this embodiment, the algorithm control module 163 is configured to plan the walking path of the mower according to the map boundary information, and can calculate in real-time according to detection data of the obstacle detection module 165 to correct the map boundary information and the walking path.

Please refer to FIG. 37. The algorithm control module 163 is configured to be capable of comparing the real-time position information of the mower with the corrected map boundary information and walking path to determine whether the mower goes out of the boundary and deviates from the walking path. If it goes out of the boundary or deviates from the walking path, there will be the abnormal status information.

Please refer to FIG. 33 and FIG. 34. The state detection module 161 may further include a collision detection module 1612 for example. The collision detection module 1612 is used for detecting whether the mower collides. When the mower collides, the bottom control module 162 or the algorithm control module 163 determines that the mower has the abnormal state information.

Please refer to FIG. 33 and FIG. 34. The state detection module 161 may further include a lifting detection module 1613 for example. The lifting detection module 1613 is used for detecting whether the mower leaves the ground. When the mower leaves the ground, the bottom control module 162 or the algorithm control module 163 determines that the mower has the abnormal state information.

Please refer to FIG. 37. In the above embodiment, a control process of the safety control system of the mower is as follows:

according to the preset period, such as 0.1s, performing following operations in a cycle: the bottom control module 162 receiving information such as satellite position, collision and lifting, the bottom control module 162 determining whether the mower is out of the boundary or triggered by the collision and the lifting through the stored map boundary information, if the determination result is no abnormality, then uploading the position information to the algorithm control module 163, if the determination result is abnormal, then controlling the mower to stop, the algorithm control module 163 secondly determining whether the mower is out of the boundary or triggered by the collision and the lifting, as well as other obstacles through the stored complete map information, if the determination result is no abnormality, the mower continuing to work; if the determination result is abnormal, then stopping the mower.

In summary, the disclosure adopts the bottom control module 162 to make a preliminary determination on the working state of the garden tool. When the bottom control module 162 determines that the garden tool is not abnormal, it is then handed over to the algorithm control module 163 to make a secondary determination, so as to ensure that the system can reliably identify the abnormal state information of the garden tool. The disclosure adopts the bottom control module 162 to make a pre-determination. On one hand, the response speed can be improved, on the other hand, the computing power of the algorithm control module 163 can be liberated, which avoids a problem that the garden tool cannot make a timely reflection to the abnormal working state due to a system delay, and improves a safety of the garden tool.

Please refer to FIG. 39 through FIG. 48. A technical solution of the disclosure is described in detail in combination with a remote control system and control method of a robotic mower. It may be understood that, a following embodiment is only one embodiment of the disclosure. In fact, the disclosure can not only be applied to a remote control of the mower, but can also be applied to a remote control of other types of garden tools such as robotic vacuums and robotic snow blowers.

Please refer to FIG. 39 through FIG. 46. The remote control system of the robotic mower includes a charging station 500 and the mower 100. The charging station 500 includes a human-computer interaction module 511, a remote control module 512, a signal generation module 513 and a boundary wire 514. The mower 100 includes a signal receiving module 171, a signal processing module 172 and a body control module 173.

Please refer to FIG. 41. The human-computer interaction module 511 is configured to be capable of inputting an interactive instruction for the garden tool. In an exemplary embodiment, the interactive instruction includes an emergency stop instruction and a returning instruction, and the human-computer interaction module 511 includes an emergency stop switch and a returning switch. It may be understood that, the emergency stop switch is used for inputting the emergency stop instruction, and the returning switch is used for inputting the returning instruction.

In an actual application, the charging station 500 is arranged at a position close to a house. On one hand, it is for a convenience of power, and on the other hand, it is for a convenience of personnel to remotely control the mower 100 through the charging station 500. When an unexpected situation occurs with the mower 100, a human intervention can be made quickly. In an embodiment, in a general use of the mower 100, the working path of the mower 100 needs to be planned first. The mower 100 mows according to the preset working path. However, when new obstacles such as pedestrians and buckets appear in a pre-planned operation area, the working path of the mower 100 will be blocked, and this may cause the mower 100 to deviate from the preset path, and even cause a movement of the mower 100 to be restricted. At this time, the human intervention is required to control the mower 100 to stop or return. In the disclosure, the human-computer interaction module 511 is mounted on the charging station 500, and the operator can take over a control of the mower 100 at a first time, which avoids an occurrence of an unexpected event, and reduces losses.

The human-computer interaction module 511 may be, for example, a touch panel or a mechanical button. It may be understood that, the human-computer interaction module 511 of the disclosure may also be a more complex device to realize more abundant functions. For example, the human-computer interaction module 511 may also be a voice-activated switch with a voice recognition module, or a motionsensing switch with an image recognition module.

It may be understood that, the interactive instruction that the human-computer interaction module 511 can input is not limited to the emergency stop instruction and the returning instruction. In practical application, corresponding interaction instruction may be appropriately increased or decreased according to a demand. For example, in a garden environment with more shrubs, an alarm instruction may further be input. When the alarm instruction is input, the garden tool can send out alarm sound, so that personnel can quickly find the mower 100.

Please refer to FIG. 41. The remote control module 512 is connected with the human-computer interaction module 511, and the remote control module 512 is configured to be capable of receiving the interaction instruction, and generating control information for the garden tool according to the interaction instruction. In an exemplary embodiment, the remote control module 512 may be an MCU (microcontrol unit) for example, and it may be understood that the MCU may also be replaced by other programmable controllers. In this embodiment, the control information includes emergency stop control information and returning control information. The remote control module 512 can generate the emergency stop control information when receiving the emergency stop instruction input by the human-computer interaction module 511, and the remote control module 512 can generate the returning control information when receiving the return instruction input by the human-computer interaction module 511.

Please refer to FIG. 39 and FIG. 41. The signal generation module 513 is connected with the remote control module 512, and the signal generation module 513 is configured to be capable of receiving the control information and generates an encoded pulse signal carrying the control information according to the control information. In an embodiment, the signal generation module 513 may include a pulse signal generator and a modulator for example, and the modulator adjusts parameters such as frequency, period and other parameters of the pulse signal according to certain rules, so that an encoded pulse signal with a specific meaning is formed. Please refer to FIG. 47 and FIG. 48. For example, different encoded information may be represented by different duration ratios of T0, T1, and T2. T0, T1, and T2 respectively represent a duration of each change of the pulse signal, and each encoded pulse signal may represent at least one control information.

Please refer to FIG. 39 and FIG. 41. The boundary wire 514 is laid at a boundary of the preset working area of the garden tool, the boundary wire 514 is connected with the signal generation module 513, and the boundary wire 514 is configured to be capable of transmitting the encoded pulse signal outward in a form of electromagnetic waves for the mower 100 to receive. In an embodiment, the boundary wire 514 is laid underground to prevent the mower 100 from accidentally damaging the boundary wire 514. The boundary wire 514 may be, for example, an ordinary copper wire of the single-core type, or naturally a two-core type wire may also be used. The boundary wire 514 is connected to the signal generation module 513, and the boundary wire 514 separates the working area of the mower 100 from a non-working area of the mower 100, and the working area may have an arbitrarily shaped boundary profile.

It should be noted that, the signal generation module 513 may generate a separate boundary identification signal to determine whether the mower 100 is on an inner side of the boundary or on an outer side of the boundary. On the other hand, it needs to be understood that, since a magnetic field around the boundary wire 514 is distributed around the boundary wire 514, an induced current direction when the mower 100 is on the inner side of the boundary and on the outer side of the boundary is different. Therefore, theoretically, as long as there is a changing current in the boundary wire 514, the mower 100 can determine whether the mower 100 is on the inner side of the boundary or the outer side of the boundary by the induced current direction, so the mower 100 may also determine the boundary position through a signal carrier of other control information.

Further, the charging station 500 may further include, for example, a charging module, which is connected with the remote control module 512, and the charging module is used for charging the returning mower 100.

Please refer to FIG. 40, FIG. 42 through FIG. 44. The signal receiving module 171 is configured to be capable of receiving the encoded pulse signal carrying control information transmitted by the boundary wire 514. In an exemplary embodiment, the signal receiving module 171 may include an induction coil for example.

Please refer to FIG. 44. The signal processing module 172 includes a filtering circuit 1721, a shaping circuit 1722 and an amplifying circuit 1723. It may be understood that, the filter circuit 1721 is used for filtering the encoded pulse signal. The shaping circuit 1722 is used for shaping the encoded pulse signal after filtering, and the amplification circuit 1723 is used for amplifying the encoded pulse signal after shaping.

Please refer to FIG. 43. The host control module 173 is connected with the signal receiving module 171, the host control module 173 is configured to be capable of parsing the encoded pulse signal to obtain the control information carried in the encoded pulse signal, and the host control module 173 is configured to be capable of controlling an action of the mower 100 according to the control information. In an embodiment, the host control module 173 includes a signal parsing module 1731 and a motion control module 1732. The signal parsing module 1731 is used for parsing the encoded pulse signal to obtain the control information carried in the encoded pulse signal. The motion control module 1732 is used for controlling the action of the mower 100 according to the control information. In an embodiment, the motion control module 1732 is connected with the walking mechanism 120 and is used for controlling an action of the walking mechanism 120 to realize a stop or a returning of the mower 100.

In an embodiment of the disclosure, the mower 100 further includes a battery pack and a charging module. The battery pack is connected with the walking mechanism 120 and the charging module, the charging module is connected with the host control module 173, and the mower 100 can be adapted to the charging module of the charging station 500 after returning, so as to realize an automatic charging of the mower 100.

Based on the remote control system of the mower 100, a specific control method of the disclosure is as follows:
performing following operations on the charging station 500:
S501: receiving the interactive instruction for the mower 100, and in an embodiment, the interactive instruction including the emergency stop instruction and/or the returning instruction;
S502: generating control information for the mower 100 according to the interactive instruction, in an embodiment, when the interactive instruction is the emergency stop instruction, generating the emergency stop control information for the mower 100, when the interactive instruction is the returning instruction, generating the returning control information for the mower 100;
**S503:** generating the encoded pulse signal carrying the control information according to the control information;
**S504:** sending the encoded pulse signal to the boundary wire 514, so as to send the encoded pulse signal to the mower 100 in the form of electromagnetic waves through the boundary wire 514;
performing following operations on the mower 100:
S1001: receiving the encoded pulse signal carrying the control information transmitted by the boundary wire 514;
**S1002:** filtering, shaping, amplifying the encoded pulse signal;
S1003: parsing the encoded pulse signal after processing, obtaining the control information, in an embodiment, the control information including boundary identification information, and the control information further including the emergency stop control information and/or the returning control information.
**S1004:** controlling the mower 100 to perform operations contained in the control information according to the control information, such as a stop operation or a returning operation.

In summary, the system includes a host of the mower 100, the charging station 500 (a charging pile) and a boundary line surrounded by a low-resistance wire to form a limited area. The host of the mower 100 receives a signal sent by the charging pile through the boundary line, determines whether it is in the limited area of the surrounding line, and works autonomously. The charging pile is provided with a STOP (emergency stop) button, a Home (returning) button, etc. For the setting information, when needed, the charging pile utilizes a carrier signal loaded on the boundary line to radiate to the surrounding space through the electromagnetic waves, and the host of the mower 100 is provided with a boundary line sensor, a signal amplifying circuit 1723 and a programmable device. The boundary line sensor can receive the electromagnetic wave signal sent by the charging pile, convert it into an electrical signal, and send it to a programmable module through a signal amplification of the circuit. The programmable module parses the corresponding setting commands of the charging pile through a loaded decoding software to realize functions such as STOP host shutdown and Home host returning to the charging pile for charging. If the mower 100 has an unexpected situation, it is necessary to manually intervene to stop the mower or enable the mower 100 to return to the charging pile to charge. There is the STOP button and the Home button on the charging pile, and the mower 100 can be operated at a fixed place near the house without chasing the mower 100 at work, which enables the user to have one more option for rapid intervention, and effectively reduces a safety risk.

The boundary line signal of the disclosure is a pulse signal or a combination of a plurality of such pulse signals as shown in FIG. 47 and FIG. 48. In addition to being capable of defining an inside and outside of the boundary line, a boundary signal generator further encodes an alternating pulse signal, so that the pulse signal transmitted to the boundary line has a specific meaning, and these data frame pulse signals are received by a boundary signal detection sensor, are decoded by an MCU on the mower 100. Then a corresponding command is executed. A boundary receiving signal sensor converts a magnetic signal formed by a data frame pulse current signal transmitted on the boundary line into a weak electrical signal, and then filters out interfering signals through a hardware filter, then amplifies it through a signal amplifier, and finally enters the MCU for decoding.

The disclosure can artificially remotely intervene to control the mower 100, which reduces a risk that the mower 100 accident causes. The disclosure can reduce production cost, utilize an original boundary line system, increase a safety function, and do not need to add an additional pair of wireless communication modules on the charging pile and the host of the mower 100.

The above embodiments only illustrate principles and effects of the disclosure, but are not intended to limit the disclosure. Anyone familiar with this technology may modify or change the above embodiments without departing from a scope of the disclosure. Therefore, all equivalent modifications or changes made by those with ordinary knowledge in the technical field without departing from the technical ideas disclosed in the disclosure shall still be covered by the claims of the disclosure.

## Claims

1. A control method of a robotic tool, comprising:
moving the robotic tool along a first direction of a preset path ;
detecting a first stop event;
robotic tool moving the robotic tool a first preset distance along a second direction opposite to the first direction;
creating an obstacle avoidance path;
rotating the robotic tool a preset angle;
moving the robotic tool along the obstacle avoidance path until the robotic tool returns to the preset path;
moving the robotic tool along the second direction until a second stop event is detected; and
moving the robotic tool along the first direction.

2. The control method of the robotic tool according to claim 1, wherein, the first stop event comprises detection of an obstacle within a first threshold distance in the first direction of the robotic tool.

3. The control method of the robotic tool according to claim 1, wherein, the second stop event comprises detection of an obstacle within a second threshold distance in the second direction of the robotic tool.

4. The control method of the robotic tool according to claim 2, wherein, creating an obstacle avoidance path comprises:
defining an estimated radius of the obstacle, taking the estimated radius as an obstacle avoidance distance, and creating the obstacle avoidance path according to the obstacle avoidance distance.

5. The control method of the robotic tool according to claim 4, wherein,
when the robotic tool moves along the obstacle avoidance path,
detecting a front area of the robotic tool in real time; and
determining there is the obstacle in a third threshold distance in front of the robotic tool;
moving the robotic tool to retreat at a second preset distance,
adding a preset increment to the obstacle avoidance distance as a new obstacle avoidance distance,
re-creating a new obstacle avoidance path according to the new obstacle avoidance distance.
robotic tool

6. The control method of the robotic tool according to claim 4, wherein, a planning method of the obstacle avoidance path comprises:
determining a starting point, a position where the robotic tool locates after retreating the first preset distance being the starting point;
determining a center of a circle, a point on the preset path of the first direction of the robotic tool being the center of the circle, and a distance between the center of the circle and the starting point being equal to the obstacle avoidance distance; and
determining a semicircular path with the obstacle avoidance distance as a radius according to the center of the circle, two ends of the semicircular path being respectively located on the preset path, and the semicircular path being the obstacle avoidance path.

7. The control method of the robotic tool according to claim 4, wherein, a planning method of the obstacle avoidance path comprises:
determining a starting point, and a position where the robotic tool locates after retreating the first preset distance being the starting point;
determining a first section, the first section being perpendicular to the preset path, the starting point be a start point of the first section and a length of the first section being equal to the obstacle avoidance distance;
determining a second section, the second section being parallel to the preset path, an end point of the first section being a start point of the second section and a length of the second section being equal to the obstacle avoidance distance; and
determining a third section, the third section being perpendicular to the preset path, an end point of the second section being a start point of the third section and a length of the third section being equal to the length of the first section;
wherein, the obstacle avoidance path is the first section, the second section and the third section.

8. The control method of the robotic tool according to claim 7, wherein,
when the robotic tool walking along the second section detects the presence of the obstacle in a third threshold distance ahead, adding a preset increment to the obstacle avoidance distance as a new obstacle avoidance distance, the length of the first section and the length of the third section being equal to the new obstacle avoidance distance, and the length of the second section being unchanged.

9. The control method of the robotic tool according to claim 7, wherein,
when the robotic tool moving along the third section detects the presence of the obstacle in a third threshold distance ahead, adding a preset increment to the obstacle avoidance distance as a new obstacle avoidance distance, the length of the second section being equal to the new obstacle avoidance distance, and the length of the first section and the length of the third section being unchanged.

10. The control method of the robotic tool according to claim 5, wherein, after re-creating the new obstacle avoidance path according to the new obstacle avoidance distance, driving the robotic tool into the new obstacle avoidance path from a current position of the robotic tool after retreating the second preset distance.

11. The control method of the robotic tool according to claim 1, wherein, controlling the robotic tool to move along the second direction comprises:
moving the robotic tool in the second direction in a forward manner or robotic tool in a backward manner.

12. A robotic tool, comprising:
a main body,
a walking mechanism, mounted at a bottom of the main body,
a detection module, mounted on the main body and configured to detect whether there is an obstacle in a moving direction of the robotic tool, and
a control module, connected with the walking mechanism and the detection module, when the detection module detects a presence of the obstacle within a preset distance in front of the main body, the control module being capable of controlling the walking mechanism to retreat a certain distance, generating an obstacle avoidance path, and controlling the walking mechanism to walk along the obstacle avoidance path.

13. The robotic tool according to claim 12, wherein, the detection module includes at least one of a mechanical collision sensor, an ultrasonic radar, a laser radar, and an image recognition camera.

14. The robotic tool according to claim 12, wherein, the control module comprises a walking control module and a path planning module, the walking control module is configured to control the robotic tool to move forward, backward and steer, and the path planning module is configured to generate the obstacle avoidance path.

15. The robotic tool according to claim 14, wherein, the path planning module is configured to be connected with the detection module and the walking control module, when the detection module detects that there is the obstacle in a first threshold distance in front of the robotic tool, the path planning module sets the obstacle avoidance path and sends the obstacle avoidance path to the walking control module, and the walking control module controls the robotic tool to walk along the obstacle avoidance path.
